# EUROPÄISCHE PATENTSCHRIFT

(11) **EP 2 917 255 B1**
(45) Veröffentlichungstag und Bekanntmachung des Hinweises auf die Patenterteilung: **26.04.2017**
(21) Anmeldenummer: 13789316.0
(22) Anmeldetag: 12.11.2013
(51) Int. Cl.: C08G 18/12, C08G 18/48, C08G 18/69, C09J 175/04

(54) **NEUE SCHLAGZÄHIGKEITSMODIFIKATOREN FÜR EPOXY-BASIERTE KLEBSTOFFE**
NEW IMPACT RESISTANCE MODIFIERS FOR EPOXY BASED ADHESIVES
NOUVEAUX MODIFICATEURS DE RÉSILIENCE POUR DES ADHÉSIFS À BASE D'ÉPOXY

(30) Priorität: 12.11.2012 EP 12192264
(43) Veröffentlichungstag der Anmeldung: 16.09.2015
(73) Patentinhaber: Sika Technology AG, 6340 Baar (CH)
(72) Erfinder: VOCI, Tina, CH-8050 Zürich (CH); HOFSTETTER, David, CH-8405 Winterthur (CH); KRÜGER, Christian, CH-8952 Schlieren (CH); SCHULENBURG, Jan Olaf, CH-8610 Uster (CH)
(74) Vertreter: Sika Patent Attorneys
(86) Internationale Anmeldenummer: PCT/EP2013/073542
(87) Internationale Veröffentlichungsnummer: WO 2014/072515

(56) Entgegenhaltungen:
- EP-A1- 1 741 734
- EP-A1- 2 060 592
- EP-A2- 0 383 505
- WO-A1-2004/055092

## Beschreibung

### Technisches Gebiet

Die Erfindung betrifft einen Epoxidgruppen-terminierten Schlagzähigkeitsmodifikator, sowie Verfahren zur Herstellung desselben, sowie die Verwendung des Schlagzähigkeitsmodifikators in 1K- oder 2K-Epoxidharzzusammensetzungen.

### Stand der Technik

In der Fertigung sowohl von Fahrzeugen und Anbauteilen oder auch Maschinen und Geräten werden anstelle oder in Kombination mit herkömmlichen Fügeverfahren wie Schrauben, Nieten, Stanzen oder Schweißen immer häufiger hochwertige Klebstoffe eingesetzt. Dadurch entstehen Vorteile und neue Möglichkeiten in der Fertigung, beispielsweise die Fertigung von Verbund- und Hybridwerkstoffen oder auch größere Freiheiten beim Design von Bauteilen. Die Klebstoffe müssen für eine Anwendung in der Fahrzeugherstellung gute Haftungen auf allen eingesetzten Untergründen, insbesondere elektrolytisch verzinkten, feuerverzinkten, und nachträglich phosphatierten Stahlblechen, beölten Stahlblechen sowie auf verschiedenen, gegebenenfalls oberflächenbehandelten, Aluminiumlegierungen aufweisen. Diese guten Haftungseigenschaften müssen besonders auch nach Alterung (Wechselklima, Salzsprühbad etc.) ohne große Qualitätseinbussen erhalten bleiben. Wenn die Klebstoffe als Rohbauklebstoffe im Automobilbau eingesetzt werden, ist die Beständigkeit dieser Klebstoffe gegenüber Reinigungsbädern und Tauchlackierung (sog. Auswaschbeständigkeit) von großer Wichtigkeit, damit die Prozesssicherheit beim Hersteller garantiert werden kann.

Die Klebstoffe für den Rohbau sollen im Fall von 1K Klebstoffen unter den üblichen Einbrennbedingungen von idealerweise 30 Min. bei 180 °C aushärten. Im Fall von 2K Klebstoffen soll die Aushärtung bei Raumtemperatur im Lauf von einigen Tagen bis ca. 1 Woche erfolgen aber auch ein beschleunigtes Aushärtungsregime wie z. B. 4h RT gefolgt von 30 min 60°C oder 85°C soll anwendbar sein. Des Weiteren sollen sie aber auch bis etwa 220 °C beständig sein. Weitere Anforderungen für einen solchen gehärteten Klebstoff beziehungsweise der Verklebung sind die Gewährleistung der Betriebssicherheit sowohl bei hohen Temperaturen bis etwa 90 °C als auch bei tiefen Temperaturen bis etwa -40 °C. Da es sich bei diesen Klebstoffen um strukturelle Klebstoffe handelt und deshalb diese Klebstoffe strukturelle Teile verkleben, sind eine hohe Festigkeit und Schlagzähigkeit des Klebstoffes von größter Wichtigkeit.

Herkömmliche Epoxidklebstoffe zeichnen sich zwar durch eine hohe mechanische Festigkeit, insbesondere eine hohe Zugfestigkeit aus. Bei schlagartiger Beanspruchung der Verklebung sind klassische Epoxidklebstoffe jedoch meist zu spröde und können deshalb unter Crashbedingungen, bei denen sowohl große Zug- als auch Schälbeanspruchungen auftreten, den Anforderungen, insbesondere der Automobilindustrie, bei weitem nicht genügen. Ungenügend sind diesbezüglich oft besonders die Festigkeiten bei hohen, insbesondere aber bei tiefen Temperaturen (z.B. < - 10 °C).

Aus der Literatur sind zwei Methoden bekannt, wie die Sprödigkeit von Epoxidklebstoffen reduziert und damit die Schlagzähigkeit erhöht werden kann: Einerseits kann das Ziel durch die Beimengung von zumindest teilvernetzten hochmolekularen Verbindungen wie Latices von Kern/Schale-Polymeren oder anderen flexibilisierenden Polymeren und Copolymeren erreicht werden. Eine solche Methode ist z.B. in US 5290857 beschrieben. Andererseits kann auch durch Einführung von Weichsegmenten, z.B. durch die entsprechende Modifizierung der Epoxidkomponenten, eine gewisse Zähigkeitserhöhung erreicht werden. So werden in US 4952645 Epoxidharzzusammensetzungen beschrieben, welche durch die Umsetzung mit Carbonsäuren, insbesondere di- oder trimeren Fettsäuren, sowie mit Carbonsäure-terminierten Diolen flexibilisiert wurden.

EP 0353190 A2 betrifft eine Flexibilisierungskomponente für Epoxidharze auf Basis von Monophenol- oder Epoxy-terminierten Polymeren. EP 1574537 A1 und EP 1602702 A1 beschreiben Epoxidharz-Klebstoffzusammensetzungen, die Monophenol- oder Epoxy-terminierte Polymere als Schlagfestmacher enthalten.

WO 2004/055092 A1 beschreibt hitzehärtbare Epoxidharzzusammensetzungen mit verbesserter Schlagzähigkeit durch Verwendung eines Epoxidgruppen-terminierten Schlagzähigkeitsmodifikators im Epoxidkleber, wobei der Schlagzähigkeitsmodifikator durch Umsetzung von einem Isocyanat-terminierten Präpolymer mit Hydroxy-terminierten Epoxidverbindungen erhalten wird.

WO 2005/007720 A1 beschreibt Epoxidgruppen-terminierte Schlagzähigkeitsmodifikatoren, die durch Umsetzung von einem Isocyanat-terminierten Präpolymer mit Hydroxy-terminierten Epoxidverbindungen erhalten werden, wobei der Schlagzähigkeitsmodifikator mindestens ein aromatisches Strukturelement aufweist, welches über Urethangruppen in die Polymerkette eingebunden ist.

EP 1741734 A1 betrifft eine hitzehärtbare Epoxidharzzusammensetzung, die ein Epoxid-Festharz und einen Schlagzähigkeitsmodifikator, der durch die Reaktion einer Monohydroxyl-Epoxidverbindung und eines Isocyanat-terminierten Polyurethanpolymer erhältlich ist, umfasst, wobei in einem Beispiel zur Herstellung des Polyurethanpolymers eine Mischung von Polyalkylenglykolen und hydroxylterminiertem Polybutadien als Polyol verwendet wird.

EP 2060592 A1 beschreibt hitzehärtende Epoxidharzzusammensetzungen, wobei in einem Beispiel die Herstellung eines Zähigkeitsverbesseres aus einer Mischung von einem Polyalkylenglykol und einem hydroxylterminierten Polybutadien und Isophorondiisocyanat und Cardanol als Blockierungsmittel angegeben wird.

EP 0383505 betrifft einen Reaktivschmelzkleber, der ein Urethanprepolymer aus einem Polyisocyanat und einem Polyetherpolyol und ein thermoplastisches Elastomer umfasst, wobei für die Herstellung des Urethanprepolymers zusätzlich hydroxyterminierte Polybutadiene eingesetzt werden können.

### Darstellung der Erfindung

Aufgabe der vorliegenden Erfindung ist die Bereitstellung von Schlagzähigkeitsmodifikatoren für Epoxidharz-Zusammensetzungen, mit denen crashfeste Klebstoffe mit guten und ausgewogenen mechanischen Eigenschaften erhalten werden können, insbesondere bezüglich Zugscherfestigkeit, Elastizitätsmodul und Schlagschälwiderstand. Sie sollen sich vorzugsweise als Bestandteil von einkomponentigen oder zweikomponentigen Epoxidharz-Zusammensetzungen, insbesondere Klebstoffen, eignen. Ein weiteres Ziel bestand darin, die Schlagzähigkeitsmodifikatoren in einem einstufigen Verfahren herstellen zu können, um das Herstellungsverfahren zu vereinfachen.

Die mögliche Gelierung und Bildung von Inhomogenitäten bei der Herstellung der Epoxid-terminierten Schlagzähigkeitsmodifikatoren sollte ferner verringert oder vermieden werden, um dadurch die Prozesssicherheit zu erhöhen.

Die Aufgabe konnte überraschenderweise durch ein Verfahren zur Herstellung eines Epoxidgruppen-terminierten Schlagzähigkeitsmodifikators gelöst werden, das die Umsetzung von
a) zwei oder mehr Polyolen der Formel (I) 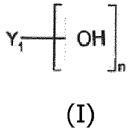 worin Y₁ für einen n-wertigen Rest eines reaktiven Polymers nach dem Entfernen endständiger Hydroxylgruppen steht; und n = 2, 3 oder 4; bevorzugt 2 oder 3, ist,
b) einem oder mehreren Polyisocyanaten der Formel (II) 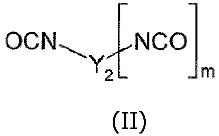 worin Y₂ für einen divalenten Rest von aliphatischen, cycloaliphatischen, aromatischen oder araliphatischen Diisocyanaten nach Entfernen der Isocyanatgruppen steht, oder für einen trivalenten Rest von Trimeren oder Biureten von aliphatischen, cycloaliphatischen, aromatischen oder araliphatischen Diisocyanaten nach Entfernen der Isocyanatgruppen steht; und m = 1 oder 2 ist; und
c) mindestens einem Epoxidharz, umfassend eine eine primäre oder sekundäre Hydroxygruppe enthaltende Epoxidverbindung der Formel (III) 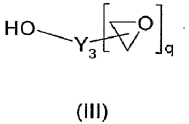 worin Y₃ für einen Rest eines eine primäre oder sekundäre Hydroxylgruppe enthaltenden aliphatischen, cycloaliphatischen, aromatischen oder araliphatischen Epoxids nach dem Entfernen der Epoxidgruppen und der primären oder sekundären Hydroxylgruppe steht; und q = 1, 2 oder 3 ist,
wobei die Polyole der Formel (I) a1) mindestens ein Polyetherpolyol und a2) mindestens einen OH-terminierten Kautschuk umfassen, wobei das Gewichtsverhältnis von Polyetherpolyol zu OH-terminiertem Kautschuk im Bereich von 7:3 bis 2:8 liegt.

Durch den Einsatz der beiden unterschiedlichen Polyole in Kombination konnten überraschenderweise sehr gute mechanische Eigenschaften für die gehärteten Klebstoffe erzielt werden. Desweiteren konnten die erfindungsgemäßen Schlagzähigkeitsmodifikatoren auch in einer einstufigen Reaktion hergestellt werden, was das Verfahren deutlich vereinfacht.

Präpolymere sind oligomere oder auch bereits selbst polymere Verbindungen, die als Vor- oder Zwischenprodukte zur Synthese von höhermolekularen Substanzen dienen. Die Vorsilbe Poly in Ausdrücken wie Polyol oder Polyisocyanat bedeutet, dass die Verbindung zwei oder mehr der genannten Gruppen aufweist, ein Polyol ist somit eine Verbindung mit zwei oder mehr Hydroxygruppen. Dem Fachmann ist bekannt, dass bei polymeren Verbindungen in der Regel ein Gemisch unterschiedlicher Verbindungen vorliegt, in denen z.B. auch nicht vollständig umgesetzte Verbindungen enthalten sein können. Die als Gemische vorliegenden Polyole können daher insgesamt auch ein OH-Äqivalentgewicht unter 2 aufweisen, z.B. größer 1,5. Diese gilt für andere polymere Verbindungen wie Polyisocyanate entsprechend.

Die Epoxidgruppen-terminierten Schlagzähigkeitsmodifikatoren umfassen vollständig blockierte oder teilweise blockierte Isocyanat-terminierte Präpolymere. Die Isocyanat-terminierten Präpolymere werden hier auch als PU-Polymere bezeichnet.

Für den Epoxidgruppen-terminierten Schlagzähigkeitsmodifikator, werden a) zwei oder mehr Polyole der Formel (I) eingesetzt 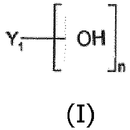 worin Y₁ für einen n-wertigen Rest eines reaktiven Polymers nach dem Entfernen endständiger Hydroxylgruppen steht; und n = 2, 3 oder 4; bevorzugt 2 oder 3, ist, wobei die Polyole der Formel (I) a1) mindestens ein Polyetherpolyol und a2) mindestens einen OH-terminierten Kautschuk umfassen, wobei das Gewichtsverhältnis von Polyetherpolyol zu OH-terminiertem Kautschuk im Bereich von 7:3 bis 2:8 liegt.

Es können ein oder mehrere Polyetherpolyole eingesetzt werden. Es eignen sich z.B. Polyoxyalkylenpolyole, auch Polyetherpolyole genannt, welche das Polymerisationsprodukt von Ethylenoxid, 1,2-Propylenoxid, 1,2- oder 2,3-Butylenoxid, Tetrahydrofuran oder Mischungen davon sind, gegebenenfalls polymerisiert mit Hilfe eines Startermoleküls mit zwei oder drei aktiven H-Atomen wie beispielsweise Wasser oder Verbindungen mit zwei oder drei OH-Gruppen. Eingesetzt werden können sowohl Polyoxyalkylenpolyole, die einen niedrigen Ungesättigtheitsgrad aufweisen (gemessen nach ASTM D-2849-69 und angegeben in Milliäquivalent Ungesättigtheit pro Gramm Polyol (mÄq/g)), hergestellt beispielsweise mit Hilfe von sogenannten Double Metal Cyanide Complex Katalysatoren (kurz DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH oder Alkalialkoholaten. Speziell geeignet sind Polyoxypropylendiole und -triole, insbesondere mit einem Ungesättigtheitsgrad von weniger als 0,02 mÄq/g und/oder mit einem Molekulargewicht im Bereich von 1000 bis 30.000 g/mol, Polyoxybutylendiole und -triole, Polyoxypropylendiole und -triole, insbesondere mit einem Molekulargewicht von 400 bis 8.000 g/mol, sowie sogenannte "EO-endcapped" (mit Ethylenoxid-Endgruppe versehene) Polyoxypropylendiole oder -triole. Letztere sind spezielle Polyoxypropylenpolyoxyethylenpolyole, die beispielsweise dadurch erhalten werden, dass reine Polyoxypropylenpolyole nach Abschluss der Polypropoxylierung mit Ethylenoxid alkoxyliert werden und dadurch primäre Hydroxylgruppen aufweisen.

Besonders bevorzugte Polyetherpolyole sind Polymerisationsprodukte von Ethylenoxid, 1,2-Propylenoxid, 1,2- oder 2,3-Butylenoxid, Tetrahydrofuran oder Mischungen davon, besonders bevorzugt sind Polypropylenoxide und Polytetrahydrofurane. Solche Polyetherpolyole sind im Handel erhältlich. Im Handel erhältliche Polytetrahydrofurane sind z. B. die PolyTHF^{®-}Produkte von BASF wie PolyTHF^{®}2000, PolyTHF^{®}2500 CO oder PolyTHF^{®}3000 CO. Im Handel erhältliche Polypropylenoxide sind z.B. Caradol^{®}-Produkte von Shell, wie Caradol^{®}2000 oder Caradol^{®}ED56, oder Acclaim^{®}-Produkte von Bayer wie Acclaim^{®}-Polyol 2200, Acclaim^{®}-Polyol 12200 oder Acclaim^{®}-Polyol 4200. Weitere mögliche Polyetherpolyole sind Voranol^{®}1010L, Voranol^{®} EP1900 oder Voranol^{®}CP4755 von Dow.

Das mittlere Molekulargewicht der eingesetzten Polyetherpolyole kann variieren. Die Polyetherpolyole besitzen z.B. ein Gewichtsmittel des Molekulargewichts (Mw) im Bereich von 500 bis 5000 g/mol, bevorzugter 1000 bis 3000 g/mol und besonders bevorzugt im Bereich von 1.500 bis 2.500 g/mol, insbesondere etwa 2000 g/mol.

Sofern nicht anders angegeben wird in der vorliegenden Anmeldung das Gewichtsmittel des Molekulargewichts mittels GPC Methode bestimmt. Dies ist eine Art der Flüssigchromatographie bei der unterschiedlich große Moleküle aufgrund ihrer unterschiedlichen Diffusionsvolumina aufgetrennt werden. Dazu werden je nach zu bestimmenden Polymer unterschiedliche Trennsäulen verwendet: Säulen: SDV 100, 1000, 10⁴ Å, (0,8 x 30 cm, 5 µm); Eluent: THF; Fluss: 1 mL/min; Temperatur: 35 °C; Kalibration relativ zu Poly(1,4-butadien)-Standards: 831 - 1.060.000 g/mol; Probenvorbereitung: Ca. 100 mg Probe wurde in 10 mL THF gelöst und mit einem 0,45 µm PTFE-Membranfilter filtriert.

Die OH-Funktionalität der eingesetzten Polyetherpolyole liegt bevorzugt im Bereich von etwa 2, z.B. Bereich von 1,9 bis 2,1. Gegebenenfalls kann eine Verbindung mit einer OH-Funktionalität von 3, wie z.B. butoxyliertes Trimethylolpropan (z.B. Si-mulsol^{®}TOMB), zu dem Polyetherpolyol zugemischt werden, um die OH-Funktionalität zu erhöhen.

Die OH-Funktionalität kann z.B. gemessen werden mittels Titration. Die Hydroxylgruppen enthaltende Substanz wird mit einem Überschuss an Diisocyanat umgesetzt und nach der Reaktion wird der Isocyanatüberschuss mit Hilfe von 0,1 M HCl Lösung titrimetrisch bestimmt und die Hydroxylzahl berechnet.

Es können ein oder mehrere OH-terminierte Kautschuke eingesetzt werden, wobei der Einsatz von zwei OH-terminierten Kautschuken, insbesondere zwei OH-terminierten Polybutadienen, zu besonders günstigen Eigenschaften führen. Unter OH-terminierten Kautschuken werden hier z.B. und bevorzugt Hydroxyl-terminierte Polybutadiene und auf Rizinusöl basierte Polyole verstanden, wobei Hydroxyl-terminierte Polybutadiene besonders bevorzugt sind. Rizinusöl ist ein Triglycerid, dessen OH-Funktionalität auf der Hydroxygruppe der Rizinusölsäure beruht, und daher ein Polyol darstellt. Rizinusöl ist ein Naturprodukt, das in verschiedenen Qualitäten erhältlich ist, z.B. in Standardqualität, als entwässertes Produkt oder mit sehr niedriger Säurezahl. Es sind auch derivatisierte Rizinusölprodukte erhältlich, z.B. oxidativ polymerisiertes Rizinusöl oder teilweise dehydratisiertes Rizinusöl, wodurch z.B. eine niedrigere OH-Funktionalität eingestellt werden kann. Auf Rizinusöl basierte Polyole umfassen Rizinusöl in den verschiedenen Qualitäten und Rizinusölderivate.

Im Handel erhältliche Hydroxyl-terminierte Polybutadiene sind z.B. die Poly bd^{®}- und Krasol^{®}-Produkte von Cray Valley wie Krasol^{®} LBH-P 2000 oder Poly bd^{®} R45V. Rizinusöl-basierte Polyole sind z.B. die Albodur^{®}-Produkte von Alberdingk Boley, wie Albodur^{®}901, oder die Polycine^{®}-Produkte von Baker Castor Oil Company, wie Polycine^{®}-GR80.

Die eingesetzten Hydroxyl-terminierten Kautschuke weisen bevorzugt ein Gewichtsmittel des Molekulargewichts (Mw) von weniger als 15.000 g/mol und bevorzugt weniger als 4.000 g/mol auf.

Die OH-Funktionalität der eingesetzten Hydroxyl-terminierten Kautschuke liegt bevorzugt im Bereich von 1,7 bis 2,2 für anionisch hergestellte Typen oder von 2,2 bis 2,8 für radikalisch hergestellte Typen. Wenn der Epoxidgruppen-terminierte Schlagzähigkeitsmodifikator in einem 2K-Epoxidharzklebstoff eingesetzt wird, wird bevorzugt ein Hydroxyl-terminierter Kautschuk, insbesondere ein Hydroxyl-terminiertes Butadien, mit einer OH-Funktionalität von kleiner gleich 2 verwendet. Wenn der Epoxidgruppen-terminierte Schlagzähigkeitsmodifikator in einem 1K-Epoxidharzklebstoff eingesetzt wird, wird bevorzugt ein Hydroxyl-terminierter Kautschuk, insbesondere ein Hydroxyl-terminiertes Butadien, mit einer OH-Funktionalität im Bereich von 2,4 bis 2,8 verwendet. Die genannte bevorzugte OH-Funktionalität für 2K- und 1K-Epoxidharzklebstoff kann auch im Rahmen einer Mischung von zwei Hydroxyl-terminierten Kautschuken, insbesondere Hydroxyl-terminierten Butadienen, erreicht werden.

Das Gewichtsverhältnis von Polyetherpolyol zu Hydroxyl-terminiertem Kautschuk liegt im Bereich von 7:3 bis 2:8, bevorzugt 7:3 bis 4:6, besonders bevorzugt 7:3 bis 5:5, und ferner bevorzugt im Bereich von 6:4 bis 2:8, bevorzugter 6:4 bis 3:7. Auf diese Weise können die mechanischen Eigenschaften des gehärteten Klebstoffs verbessert werden, insbesondere der Schlagschälwiderstand bei -30°C.

Die Polyetherpolyole und die Hydroxyl-terminierten Kautschuke besitzen unterschiedliche Löslichkeiten, insoweit kann man auch von "hydrophilen" Polyetherpolyolen bzw. "hydrophoben" Hydroxy-terminierten Kautschuken sprechen. Zur Bestimmung der Trübung (Haze) wurden Trübungsmessungen in einem Epoxidharz durchgeführt. Hierfür wurde die Trübung gemäß ASTM D1003-11^{ε1} mit einem Trübungsmessgerät (Hazemeter, Verfahren A) durchgeführt. Da es sich bei den zu untersuchenden Proben um Flüssigkeiten handelt, wurden sie zwischen Glasscheiben gemessen. Es wurden Abstandhalter verwendet, so dass die Dicke der zu messenden Probe 0,3 mm betrug. Durch Leermessungen wurde der Beitrag der Glasscheiben zur Trübung ermittelt, der dann in dem Fachmann bekannter Weise für die eigentlichen Proben herausgerechnet wurde.

In der folgenden Tabelle sind die so ermittelte Trübung oder Haze-Wert gemäß ASTM D1003-11^{ε1} für verschiedene Polyole in Epikote 828 LVEL aufgeführt (40 Gew.-% Polyol, 60 Gew.-% Epikote 828 LVEL, Messungen 7 bis 10). Trübung oder Haze-Wert gemäß ASTM D1003-11^{ε1} für Epoxidgruppen-terminierte Schlagzähigkeitsmodifikatoren ebenfalls in der Tabelle aufgeführt (20 Gew.-% Schlagzähigkeitsmodifikator, 80 Gew.-% Epikote 828 LVEL, Messungen 2 bis 6).

| Messung | | Haze-Wert |
|---|---|---|
| 1 | 100% Epikote 828 LVEL | 0,2 |
| 2 | 20% Schlagzähmodifikator in Epikote 828 LVEL (50% PolyTHF 2000/40% Krasol LBH P2000/10% PolyBD R45V) | 95,1 |
| 3 | 20% Schlagzähmodifikator in Epikote 828 LVEL (70% PolyTHF 2000/30% PolyBD R45V) | 48,3 |
| 4 | 20% Schlagzähmodifikator in Epikote 828 LVEL | 97,6 |
| | (50% PolyTHF 2000/50% Krasol LBH P2000) | |
| 5 | 20% Schlagzähmodifikator in Epikote 828 LVEL (100% PolyTHF 2000) | 0,2 |
| 6 | 20% Schlagzähmodifikator in Epikote 828 LVEL (100% Caradol ED 56) | 0,0 |
| 7 | 60% Epikote 828 LVEL/40% PolyTHF 2000 | 0,1 |
| 8 | 60% Epikote 828 LVEL/40% Caradol ED 56 | 0,0 |
| 9 | 60% Epikote 828 LVEL/40% PolyBD R45V | 98,2 |
| 10 | 60% Epikote 828 LVEL/40% Krasol LBH P2000 | 94,3 |

Die Messungen zeigen folgendes. Die Polyetherpolyole PolyTHF und Caradol (Messungen 7 und 8) lassen sich mit Epoxid-Harz mischen und ergeben keine Trübung. Dagegen lassen sich die Hydroxy-terminierten Kautschuke PolyBD und Krasol (Messungen 9 und 10) nicht mit Epoxid-Harz mischen und ergeben eine starke Trübung. Im Fall der Schlagzähmodifikatoren mit der erfindungsgemäßen Mischung von Polyolen (Messungen 2 bis 4) zeigt die Trübung, dass die Schlagzähmodifikatoren in dem Harz Aggregate bilden, was sich durch Trübung bemerkbar macht. Die Aggregatbildung ist für die Schlagzähigkeit vorteilhaft. Liegt keine Trübung vor wie im Fall der nicht erfindungsgemäßen Schlagzähmodifikatoren der Messungen 5 und 6 ist die Schlagzähigkeit schlecht.

Es sind Polyole bevorzugt, für die eine Mischung von Polyol und einem Epoxid-Flüssigharz hergestellt aus Bisphenol-A und Epichlorhydrin wie Epikote 828 LVEL in einem Gewichtsverhältnis von 40 zu 60 einen Haze-Wert gemessen nach ASTM D1003-11^{ε1} im Bereich von 50 bis 100 für Hydroxy-terminierten Kautschuk als Polyol und/oder im Bereich von 0 bis 5 für Polyetherpolyol als Polyol aufweist.

Ferner ist es für den erfindungsgemäßen Epoxidgruppen-terminierten Schlagzähmodifikator bevorzugt, dass eine Mischung von dem Schlagzähmodifikator und einem Epoxid-Flüssigharz hergestellt aus Bisphenol-A und Epichlorhydrin wie Epikote 828 LVEL in einem Gewichtsverhältnis von 20 zu 80 einen Haze-Wert gemessen nach ASTM D1003-11^{ε1} im Bereich von 20 bis 100 aufweist.

Geeignete Polyisocyanate der Formel (II) sind Diisocyanate oder Triisocyanate. Geeignete Diisocyanate sind aliphatische, cycloaliphatische, aromatische oder araliphatische Diisocyanate, insbesondere handelsübliche Produkte wie Methylendiphenyldiisocyanat (MDI), Hexamethylendiisocyanat (HDI), Toluoldiisocyanat (TDI), Tolidindiisocyanat (TODI), Isophorondiisocyanat (IPDI), Trimethylhexamethylendiisocyanat (TMDI), 2,5- oder 2,6-Bis-(isocyanatomethyl)-bicyclo[2.2.1]heptan, 1,5-Naphthalindiisocyanat (NDI), Dicyclohexylmethyldiisocyanat (H₁₂MDI), p-Phenylendiisocyanat (PPDI), m-Tetramethylxylylendiisocyanat (TMXDI) usw. sowie deren Dimere. Bevorzugt sind HDI, IPDI, MDI oder TDI. Besonders bevorzugt sind aliphatische und insbesondere cycloaliphatische Diisocyanate wie z.B. HDI, H₁₂MDI und IPDI.

Geeignete Triisocyanate sind Trimere oder Biurete von aliphatischen, cycloaliphatischen, aromatischen oder araliphatischen Diisocyanaten, insbesondere die Isocyanurate und Biurete der im vorherigen Absatz beschriebenen Diisocyanate.

Eine weitere Möglichkeit für Y₁ in Formel (I) sind kettenverlängerte Reste von Molekülen nach Entfernung der OH-Gruppen, die formal durch eine Reaktion ähnlich der Umsetzung zwischen den bereits oben erwähnten Di- oder Triolen sowie den bereits erwähnten Di- oder Triisocyanaten erhältlich sind. Dies wird durch Variation der Stöchiometrie der Reaktionspartner erreicht, wofür es zwei Möglichkeiten gibt.

Einerseits können durch einen Überschuss der OH-Gruppen bezogen auf die NCO-Gruppen OH-funktionelle Polymere mit unterschiedlich langen Ketten erhalten werden. Solche kettenverlängerte Polyole enthalten Urethan- oder Harnstoff-Gruppen in der Kette und können mit anderen Di- oder Triisocyanaten weiter umgesetzt werden. Anderseits können durch einen Unterschuss der OH-Gruppen bezogen auf die NCO-Gruppen NCO-funktionelle Polymere mit unterschiedlich langen Ketten erhalten werden.

Die Kettenlänge und Vernetzungsgrad dieser kettenverlängerten Polymere ist stark abhängig vom molaren Verhältnis [X₁H]/[NCO]. Die Ketten sind umso länger je näher dieses Verhältnis bei 1 ist. Es ist dem Fachmann klar, dass zu lange Ketten bzw. ein zu hoher Vernetzungsgrad zu nicht mehr verwendbaren Polymeren führen würde. Für die Kettenverlängerung werden insbesondere Diole und Diisocyanate bevorzugt.

Wie später näher erläutert, kann der erfindungsgemäße Schlagzähigkeitsmodifikator in einem einstufigen oder zweistufigen Verfahren hergestellt werden. Bei dem zweistufigen Verfahren werden in einem ersten Schritt die zwei oder mehr Polyole mit dem mindestens einen Polyisocyanat umgesetzt, wodurch ein Isocyanat-terminiertes Präpolymer erhalten wird, das dann mit dem Epoxidharz umgesetzt wird.

In einer alternativen Ausführungsform für das zweistufige Verfahren kann für die Herstellung des Isocyanat-terminierten Polymers neben den den mindestens zwei Polyolen und dem mindestens einen Polyisocyanat wie vorstehend beschrieben zusätzlich ein Polyphenol zur Umsetzung zugemischt werden. Die Polyphenole sind z.B. Bis-, Tris- und/oder Tetraphenole, wobei es sich um unsubstituierte oder substituierte Polyphenole handeln kann. In diesem Fall erhält man Isocyanat-terminierte Präpolymere, in denen mindestens ein aromatisches Strukturelement enthalten ist, welches über Urethangruppen in der Polymerkette eingebunden ist. Solche Verbindungen sind in der WO 2005/007720 ausführlich beschrieben, worauf hiermit Bezug genommen wird, insbesondere bezüglich der Einzelheiten der Herstellung und der einsetzbaren Komponenten. So sind geeignete Polyphenole und geeignete Herstellungswege auf den Seiten 9 und 10 bzw. 13 und 14 dieser Druckschrift beschrieben.

Zur Herstellung des Epoxidgruppen-terminierten Schlagzähigkeitsmodifikators werden ferner ein oder mehrere Epoxidharze umgesetzt. Das Epoxidharz enthält eine Epoxid-Verbindung, die eine primäre oder sekundäre Hydroxylgruppe aufweist. Die Hydroxy-Epoxidverbindung der Formel (III) weist 1, 2 oder 3 Epoxygruppen auf. Die Hydroxygruppe dieser Hydroxy-Epoxidverbindung (III) kann eine primäre oder eine sekundäre Hydroxylgruppe darstellen. Die Hydroxy-Epoxidverbindung der Formel (III) ist bevorzugt eine Monohydroxy-Epoxidverbindung.

Das Epoxidharz ist insbesondere ein flüssiges Epoxidharz. Das Epoxidharz enthält oder besteht aus Hydroxyl-haltigen Spezies, insbesondere die Hydroxyl-Epoxidverbindung der Formel (III). Es kann sich bei dem Epoxidharz bzw. Epoxid-Flüssigharz um ein im Handel erhältliches Epoxidharz-Produkt handeln.

Epoxidharze werden z.B. aus der Umsetzung einer Epoxidverbindung wie z.B. Epichlorhydrin mit einem mehrfunktionellen Alkohol, d.h. einem Diol, Triol oder Polyol, erhalten. Je nach Reaktionsführung entstehen bei der Umsetzung von mehrfunktionellen Alkoholen mit einer Epoxidverbindung wie z.B. Epichlorhydrin als Nebenprodukte auch die entsprechenden Hydroxy-Epoxidverbindungen in unterschiedlichen Konzentrationen. Diese lassen sich durch übliche Trennoperationen isolieren. Erfindungsgemäß kann aber das bei der Glycidylisierungsreaktion von Polyolen erhaltene Produktgemisch aus vollständig und partiell zum Glycidylether reagiertem Polyol eingesetzt werden. Beispiele solcher hydroxylhaltigen Epoxide in Epoxidharzen sind Trimethylolpropandiglycidylether als Gemisch enthalten in Trimethylolpropantriglycidylether, Glycerindiglycidylether als Gemisch enthalten in Glycerintriglycidylether, Pentaerythrittriglycidylether als Gemisch enthalten in Pentaerythrittetraglycidylether. Das hydroxylhaltigen Epoxid ist in einer bevorzugten Ausführungsform Trimethylolpropandiglycidylether, welcher zu einem relativ hohen Anteil in üblich hergestellten Trimethylolpropantriglycidylether vorkommt. Es können aber auch andere ähnliche hydroxylhaltige Epoxide, insbesondere Glycidol, 3-Glycidyloxybenzylalkohol oder Hydroxymethyl-cyclohexenoxid eingesetzt werden. Bevorzugt sind Epoxidharze umfassend Trimethylolpropandiglycidylether, Butandioldiglycidylether, Cyclohexandimethanoldiglycidylether oder Mischungen davon.

Es können weitere Epoxid-Flüssigharze der Formel (IV) verwendet werden, die weiter unten für die Epoxidharze (A) beschrieben werden, die eine eine primäre oder sekundäre Hydroxygruppe enthaltende Epoxidverbindung der Formel (III) enthalten.

Besonders bevorzugt sind Epoxidharze auf Basis von Diglycidylether von Bisphenol A (BADGE), Bisphenol F oder Bisphenol A/F. Diese Epoxidharze sind in großem Umfang im Handel erhältlich. Sie können aus der Umsetzung von Bisphenol A, Bisphenol F oder Mischungen von Bisphenol A und Bisphenol F (auch als Bisphenol A/F bezeichnet) mit Epichlorhydrin erhalten werden. Es können je nach Reaktionsführung hoch- oder niedermolekulare Reaktionsprodukte hergestellt werden.

Besonders bevorzugt als Hydroxy-Epoxidverbindung der Formel (III) ist der β-Hydroxyether der Formel (V) 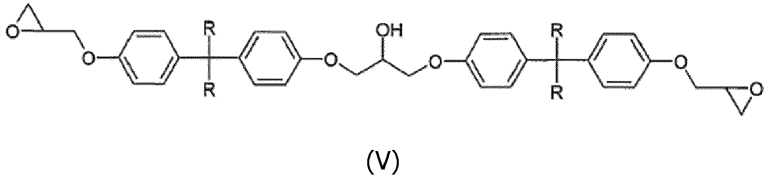 worin R unabhängig voneinander H oder Methyl ist, der in handelsüblichen flüssigen Epoxidharzen hergestellt aus Bisphenol-A (R = CH₃) und Epichlorhydrin zu etwa 15 % enthalten ist, sowie die entsprechenden β-Hydroxyether, die bei der Reaktion von Bisphenol-F (R = H) oder des Gemisches von Bisphenol-A und Bisphenol-F mit Epichlorhydrin gebildet werden. Neben dem Dimer des Bisphenol A-diglycidylethers und dem entsprechenden Dimer mit Bisphenol F oder Mischungen von Bisphenol A und Bisphenol F gemäß der Formel (V) können auch verlängerte Produkte der BADGE-Bisphenol-A Addition bzw. entsprechende Produkte mit Bisphenol F verwendet werden, die z.B. 3 oder 4 Bisphenol-Einheiten enthalten. Eine derartige Verlängerung erfolgt insbesondere, wenn ein Diglycidylether, insbesondere ein Diglycidylether von Bisphenol-A (BADGE) oder von Bisphenol-F mit einem Bisphenol bei erhöhter Temperatur umgesetzt werden. Es ist vorteilhaft, dass ein derartiger Bisphenol-verlängerter Diglycidylether mit nicht verlängertem Diglycidylether eingesetzt wird.

Dementsprechend werden bevorzugt Epoxid-Flüssigharze der Formel (A-I) als Epoxidharze eingesetzt 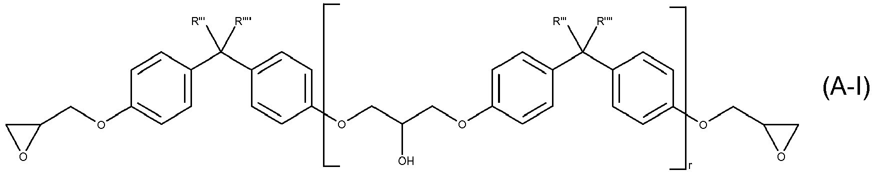 worin die Substituenten R'" und R"" unabhängig voneinander entweder für H oder CH₃ stehen und der Index r einen Wert von 0,01 bis 1, bevorzugt 0,05 bis 1, aufweist. Bevorzugt steht r für einen Wert von kleiner als 1, insbesondere kleiner 0,3 und bevorzugt kleiner 0,2. Der Ausdruck "unabhängig voneinander" in der Definition von Gruppen und Resten bedeutet in diesem Dokument jeweils, dass mehrere vorkommende aber in den Formeln gleich bezeichnete Gruppen jeweils unterschiedliche Bedeutungen aufweisen können.

Solche Epoxid-Flüssigharze der Formel (A-I) sind handelsübliche Produkte, z.B. Araldite^{®} GY 250, Araldite^{®} PY 304, Araldite^{®} GY 282 (Huntsman, bzw. Hexion) oder D.E.R.^{®} 331, D.E.R.^{®} 330 oder D.E.R.^{®} 332 (Dow) oder Epikote^{®} 828 (Hexion).

In einer weiteren bevorzugten Ausführungsform können Epoxidharze verwendet werden, die sich aus der Umsetzung von Monophenolen und Epoxidharzen ergeben, wie sie beispielsweise durch Umsatz von p-Methoxyphenol und D.E.R. 332 erhalten wurde. Des Weiteren können auch unterschiedlichste Epoxide mit einer Hydroxyether-Gruppe, hergestellt durch die Reaktion von (Poly-)Epoxiden mit einem Unterschuss von einwertigen Nukleophilen wie Carbonsäuren, Phenolen, Thiolen oder sek.-Aminen, eingesetzt werden. In einer weiteren Ausführungsform können auch Destillationsrückstände, welche bei der Herstellung hochreiner destillierter Epoxidharze anfallen, eingesetzt werden. Derartige Destillationsrückstände wie z. B. Epilox^{®} M850 enthalten deutlich höhere Konzentrationen an hydroxyhaltigen Epoxyverbindungen als Standardepoxidharze.

Die freie primäre oder sekundäre OH-Funktionalität der Hydroxy-Epoxidverbindung der Formel (III) lässt eine effiziente Umsetzung mit terminalen Isocyanatgruppen von Präpolymeren zu, ohne dafür unverhältnismäßige Überschüsse der Epoxidkomponente einsetzen zu müssen.

Bei einer zweistufigen Umsetzung können zur Umsetzung des Isocyanat-terminierten Präpolymers, das in der ersten Stufe aus den mindestens zwei Polyolen und dem mindestens einen Polyisocyanat erhalten wird, entsprechende Mengen des Epoxidharzes enthaltend hydroxylhaltige Epoxide der Formel (III), bevorzugt Monohydroxy-Epoxide, eingesetzt werden. Es kann eine äquimolare Stöchiometrie bezüglich der Isocyanatgruppen und der Hydroxylgruppen verwendet werden, d.h. ein molares Verhältnis [OH]/[NCO] von 1, hiervon kann jedoch abgewichen werden. Das Verhältnis [OH]/[NCO] beträgt z.B. geeigneterweise 0,6 bis 3,0, vorzugsweise 0,7 bis 1,5 und insbesondere 0,8 bis 1,2. Bei einem einstufigen Verfahren werden die Mengen der einzelnen Komponenten a), b) und c) so gewählt, dass die Bereiche für das vorstehend genannte Verhältnis [OH]/[NCO] für das hypothetisch intermediär aus den Komponenten a) und b) gebildete Isocyanat-terminierte Präpolymer und der Komponente c) ebenso gelten würde.

In einer bevorzugten Ausführungsform kann bei der Synthese der Epoxidharz-terminierten Polyurethan-Polymere bei der Umsetzung des Epoxidharzes mindestens eine Verbindung ausgewählt aus Anhydriden, Ketonen und Aldehyden als Glycolfänger eingesetzt werden. Bei dem zweistufigen Herstellungsverfahren kann hierfür die zweite Umsetzungsstufe, d.h. die Umsetzung des Epoxidharzes mit dem in der ersten Stufe gebildeten Isocyanat-terminierten Präpolymer, in Anwesenheit des Glycolfängers durchgeführt werden.

Ohne sich an eine Theorie binden zu wollen, wird davon ausgegangen, dass die Abfangreaktion bei Einsatz von einem Anhydrid auf der Bildung von Monoalkohol basiert. In Analogie zu dieser Abfangreaktion können die in den Epoxidharzen enthaltenen Glycole alternativ durch Umsatz mit Ketonen und Aldehyden als Ketale oder Acetale gebunden werden. Der Einsatz des Glycolfängers kann zu einer besseren Homogenität der Polymere führen.

Beim einstufigen Verfahren kann der Glycolfänger in die Reaktionsmischung enthalten sein, die die Komponenten a) bis c) enthält. Die Umsetzung des Isocyanat-terminierten Präpolymers mit dem Epoxidharz, das die Hydroxy-Epoxidverbindung enthält, kann z.B. in dem zweistufigen Verfahren vorzugsweise in Anwesenheit des Glycolfängers durchgeführt werden. Hierzu können das Isocyanat-terminierte Präpolymer, das Epoxidharz und der Glycolfänger vor der Umsetzung miteinander gemischt werden, um die Reaktionsmischung zu bilden, wobei die Reihenfolge der Zugaben beliebig ist. Beispielsweise kann zunächst das Isocyanat-terminierte Präpolymer zur Hydroxy-Epoxidverbindung gegeben werden und dann der Glycolfänger zugesetzt werden, wonach eine Mischung durch Rühren erfolgt.

In einer alternativen Ausführungsform kann die Anwesenheit des Glycolfängers dadurch erreicht werden, dass das Epoxidharz, das die Hydroxy-Epoxidverbindung der Formel (III) enthält, zunächst mit dem Glycolfänger umgesetzt wird, und das erhaltene Umsetzungsprodukt dann bei dem einstufigen Verfahren mit den Komponenten a) und b) oder bei dem zweistufigen Verfahren mit dem Isocyanat-terminierten Präpolymer gemischt und umgesetzt wird.

Bevorzugt wird ein Anhydrid als Glycolfänger eingesetzt. Bei dem Anhydrid handelt es sich um ein organisches Anhydrid, d.h. ein Carbonsäureanhydrid. Es kann ein Anhydrid oder eine Mischung verschiedener Anhydride eingesetzt werden. Prinzipiell eignet sich eine breite Palette von Anhydriden als Fänger glycolhaltiger Spezies in Epoxidharzen oder Epoxidharzmischungen. So können aromatische, cycloaliphatische, aliphatische oder difunktionelle Anhydride eingesetzt werden.

Es können auch gemischte Anhydride eingesetzt werden, in der Regel sind aber von einer Carbonsäure abgeleitete Anhydride bevorzugt. Besonders bevorzugt sind cyclische Anhydride und Derivate davon. Solche cyclischen Anhydride sind gewöhnlich aus Dicarbonsäuren abgeleitet. Unter Derivate werden substituierte Anhydride, z.B. substituiert mit C₁-C₁₈-Alkylgruppen, C₁-C₁₈-Alkenylgruppen, Arylgruppen, ankondensierten alicyclischen oder aromatischen Ringen, und/oder Anhydride, bei denen aromatische Gruppen teilweise oder vollständig hydriert sind, verstanden. Beispiele für geeignete Anhydride sind Alkansäureanhydride, wie C₂-C₁₈-Alkansäureanhydride, und Derivate davon, z.B. Essigsäureanhydrid, Propionsäureanhydrid, Buttersäureanhydrid, Valeriansäureanhydrid und Stearinsäureanhydrid, Alkandisäureanhydride, wie C₄-C₈-Alkandisäureanhydride, und Derivate davon, z.B. Bernsteinsäureanhydrid, Methylbernsteinsäureanhydrid, (2-Dodecen-1-yl)bernsteinsäureanhydrid, Phenylbernsteinsäureanhydrid, Glutarsäureanhydrid, Methylglutarsäureanhydrid, 3,3-Dimethylglutarsäureanhydrid und Itaconsäureanhydrid, Alkendisäureanhydride, wie C₄-C₈-Alkendisäureanhydride, und Derivate davon, z.B. Maleinsäureanhydrid, 2,3-Dimethylmaleinsäureanhydrid, Citraconsäureanhydrid, alicyclische Dicarbonsäureanhydride und Derivate davon, wie Cyclohexandicarbonsäureanhydrid, Norbornen-2,3-dicarbonsäureanhydrid, Methylnorbornen-2,3-dicarbonsäureanhydrid, Camphersäureanhydrid, aromatische Anhydride und Derivate davon, wie Benzoesäureanhydrid, Phtalsäureanhydrid und Derivate davon, wie Methylphthalsäureanhydrid (MPA), Methyltetrahydrophtalsäureanhydrid (MTHPA), Tetrahydrophtalsäureanhydrid, Tetraphenylphthalsäureanhydrid, Methylhexahydrophthalsäureanhydrid (MHHPA) und Hexahydrophthalsäureanhydrid, Homophthalsäureanhydrid, 1,2-Naphthalsäureanhydrid und Derivate davon wie 3,4-Dihydro-1,2-naphthalsäureanhydrid, difunktionelle Anhydride, wie Pyromellitsäuredianhydrid, Benzophenontetracarbonsäuredianhydrid und Biphenyltetracarbonsäuredianhydrid und Diglycolsäureanhydrid. Bevorzugte Anhydride sind Bernsteinsäureanhydrid, Phthalsäureanhydrid und Derivate davon, insbesondere Methylphthalsäureanhydrid bzw. 4-Methylphthalsäureanhydrid. Das Anhydrid umfasst bevorzugt den Bernsteinsäureanhydridring oder Maleinsäureanhydridring als Strukturelement.

Beispiele für Ketone und Aldehyde, die als Glycolfänger eingesetzt werden können, sind Formaldehyd, Aceton, Cyclopentanon oder Benzaldehyd.

Wenn ein Glycolfänger eingesetzt wird, kann die Menge in der Reaktionsmischung in weiten Bereichen variieren und hängt von der Art der eingesetzten speziellen Reaktionspartnern, ihrem Verhältnis und der Art des Glycolfängers ab. Beispielsweise werden bevorzugt mindestens 0,1 Gew.-%, bevorzugter mindestens 0,25 Gew.-% und besonders bevorzugt mindestens 0,4 Gew.-%, und nicht mehr als 5,0 Gew.-%, bevorzugt nicht mehr als 3,0 Gew.-% und bevorzugter nicht mehr als 2,50 oder 2,75 Gew.-% Glycolfänger, bevorzugt Anhydrid, bezogen auf die Menge an eingesetztem Epoxidharz, verwendet. Besonders bevorzugt ist der Einsatz von 0,25 bis 3,00 Gew.-%, bevorzugter 0,50 bis 1,50 Gew.-% Glycolfänger, bevorzugt Anhydrid, bezogen auf die Menge an eingesetztem Epoxidharz.

Wie vorstehend erläutert, kann die Stöchiometrie der Isocyanat-terminierten Präpolymere bzw. die dafür eingesetzten Ausgangskomponenten a) und b) und der OHfunktionellen Epoxide in dem Epoxidharz bei der Umsetzung so gesteuert werden, dass vollständig blockierte Polymere erhalten werden. Ebenfalls erfindungsgemäß sind teilblockierte Polymere, bei denen ein Teil der Isocyanatgruppen für Reaktionen in einem späteren Reaktionsschritt unreagiert belassen bleibt.

Das erhaltene Epoxidgruppen-terminierte Polymer weist vorteilhaft einen elastischen Charakter auf und ist weiterhin vorteilhaft in Epoxidharzen löslich oder dispergierbar. Es kann bei Bedarf und je nach der resultierenden Viskosität mit weiteren Epoxidharzen verdünnt werden. Bevorzugt sind hierzu Diglycidylether von Bisphenol-A, Bisphenol-F sowie von Bisphenol-A/F, und weiter unten beschriebenen epoxidgruppentragenden Reaktivverdünner, insbesondere Hexandioldiglycidylether, Polypropylenglykoldiglycidylether und Trimethylolpropantriglycidylether.

Zur Komponentenmischung können ein oder mehrere Lösungsmittel gegeben werden. Zur Umsetzung können Katalysatoren und/oder Stabilisatoren mit eingesetzt werden. Mit solchen Umsetzungen und den zweckmäßigen Additiven ist der Fachmann bestens vertraut.

Die Umsetzung kann in einer zweistufigen Umsetzung und überraschenderweise auch in einer Eintopfreaktion durchgeführt werden. Bei der Eintopfreaktion werden die Komponenten a), b) und c), gegebenenfalls in Anwesenheit des Glycolfängers, umgesetzt, wobei direkt der Epoxid-terminierte Schlagzähigkeitsmodifikator erhalten wird. Durch die einstufige Verfahrensführung wird das Verfahren vereinfacht.

Bei der zweistufigen Umsetzung werden im ersten Schritt a) die zwei oder mehr Polyole der Formel (I) mit b) dem mindestens einen Polyisocyanat der Formel (II) umgesetzt, um ein Isocyanat-terminiertes Präpolymer zu erhalten, und im zweiten Schritt wird das Isocyanat-terminierte Präpolymer mit dem Epoxidharz, umfassend eine eine primäre oder sekundäre Hydroxygruppe enthaltende Epoxidverbindung der Formel (III) umgesetzt, um den Epoxidgruppen-terminierten Schlagzähigkeitsmodifikator zu erhalten.

Dementsprechend betrifft die vorliegende Erfindung auch das Isocyanat-terminierte Präpolymer, das sich als Zwischenprodukt für die Herstellung des erfindungsgemäßen Epoxidgruppen-terminierten Schlagzähigkeitsmodifikator eignet, sowie ein Verfahren zu dessen Herstellung.

Gemäß dem erfindungsgemäßen Verfahren sind blockierte oder teilblockierte Isocyanat-terminierte Präpolymere erhältlich, die als Epoxidgruppen-terminierter Schlagzähigkeitsmodifikator in einer einkomponentigen oder zweikomponentigen Epoxidharzzusammensetzung, zur Erhöhung der Schlagzähigkeit der gehärteten Epoxidharzmatrix verwendet werden können. Es handelt sich bevorzugt um eine 2K-Epoxidharzzusammensetzung. Die 2K oder 1K Epoxidharzzusammensetzung kann flüssig, pastös oder fest und/oder kalt- oder hitzehärtend sein.

Die Epoxidharzzusammensetzung ist bevorzugt ein 1K oder 2K Epoxidharzklebstoff, insbesondere ein struktureller bzw. crashfester Klebstoff, z.B. für OEM-Produkte, EP/PU-Hybride, Strukturschäume aus Epoxidharzsystemen (wie Sika Reinforcer^{®}) oder Reparaturanwendungen.

Die erfindungsgemäße einkomponentige oder zweikomponentige Epoxidharz-Zusammensetzung umfasst mindestens den erfindungsgemäßen Epoxidgruppen-terminierten Schlagzähigkeitsmodifikator. Des Weiteren umfassen die erfindungsgemäßen Epoxidzusammensetzungen mindestens einen Härter für Epoxidharze, der sich bei einer einkomponentigen Zusammensetzung in derselben Komponente wie der Epoxidgruppen-terminierten Schlagzähigkeitsmodifikator befindet oder bei einer zweikomponentigen Zusammensetzung in der zweiten Komponente.

Je nach Epoxidharz, das für die Herstellung des Epoxidgruppen-terminierten Schlagzähigkeitsmodifikators eingesetzt wurde, braucht neben dem erfindungsgemäßen Epoxidgruppen-terminierten Schlagzähigkeitsmodifikator in der 1K oder 2K Epoxidharzzusammensetzung kein weiteres Epoxidharz zugesetzt werden. Gegebenenfalls und bevorzugt kann aber auch ein zusätzliches Epoxidharz (A) aufgenommen werden. Das zusätzliche Epoxidharz (A) kann ein Epoxid-Flüssigharz oder Epoxid-Festharz sein. Als Epoxidharz (A) eignen sich alle Epoxidharze, die bereits vorstehend als Epoxidharze für die Umsetzung mit dem Isocyanat-terminierten Präpolymer beschrieben wurden. Im Folgenden werden weitere geeignete Komponenten und deren Anteile für die Epoxidharz-Zusammensetzung beschrieben, die ebenso für den bevorzugten Epoxidharz-Klebstoff gelten.

Als Epoxid-Flüssigharz oder Epoxid-Festharz (A) gelten insbesondere die Diglycidylether der Formel (IV) 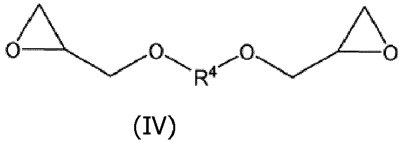 worin R⁴ für einen zweiwertigen aliphatischen oder einkernigen aromatischen oder einen zweikernigen aromatischen Rest steht.

Als Diglycidylether der Formel (IV) gelten insbesondere
- Diglycidylether von difunktionellen gesättigten oder ungesättigten, verzweigten oder unverzweigten, zyklischen oder offenkettigen C₂-C₃₀-Alkoholen, wie beispielsweise Ethylenglykol-, Butandiol-, Hexandiol-, Oktandiolgylcidylether, Cyclohexandimethanoldigylcidylether, Neopentylglycoldiglycidylether;
- Diglycidylether von difunktionellen, nieder- bis hochmolekularen Polyetherpolyolen wie beispielsweise Polyethylenglycol-diglycidylether, Polypropyleneglycol-diglycidylether;
- Diglycidylether von difunktionellen Diphenolen und gegebenenfalls Triphenolen, wobei hierunter nicht nur reine Phenole, sondern gegebenenfalls auch substituierte Phenole verstanden werden. Die Art der Substitution kann sehr vielfältig sein. Insbesondere wird hierunter eine Substitution direkt am aromatischen Kern, an den die phenolische OH-Gruppe gebunden ist, verstanden. Unter Phenolen werden weiterhin nicht nur einkernige Aromaten, sondern auch mehrkernige oder kondensierte Aromaten oder Heteroaromaten verstanden, welche die phenolische OH-Gruppe direkt am Aromaten beziehungsweise Heteroaromaten aufweisen. Als Bisphenole und gegebenenfalls Triphenolen sind beispielsweise geeignet 1,4-Dihydroxybenzol, 1,3-Dihydroxybenzol, 1,2-Dihydroxybenzol, 1,3-Dihydroxytoluol, 3,5-Dihydroxybenzoat, 2,2-Bis(4-hydroxyphenyl)propan (=Bisphenol-A), Bis(4-hydroxyphenyl)methan (=Bisphenol-F), Bis(4-hydroxyphenyl)sulfon (=Bisphenol-S), Naphtoresorcin, Dihydroxynaphthalin, Dihydroxyanthrachinon, Dihydroxy-biphenyl, 3,3-Bis(p-hydroxyphenyl)-phthalide, 5,5-Bis(4-hydroxyphenyl)hexahydro-4,7-methanoindan, Phenolpthalein, Fluorescein, 4,4'-[Bis-(hydroxyphenyl)-1,3-phenylenebis-(1-methyl-ethyliden)] (=Bisphenol-M), 4,4'-[Bis-(hydroxyphenyl)-1,4-phenylenebis-(1-methyl-ethyliden)] (=Bisphenol-P), 2,2'-Diallyl-bisphenol-A, Diphenole und Dikresole hergestellt durch Umsetzung von Phenolen oder Kresolen mit Diisopropylidenbenzol, Phloroglucin, Gallsäureester, Phenol- oder Kresolnovolacke mit -OH-Funktionalität von 2,0 bis 3,5 sowie alle Isomeren der vorgenannten Verbindungen.

Besonders bevorzugt als Diglycidylether der Formel (IV) sind Epoxid-Flüssigharze der Formel (A-I) und Epoxid-Festharze der Formel (A-II).

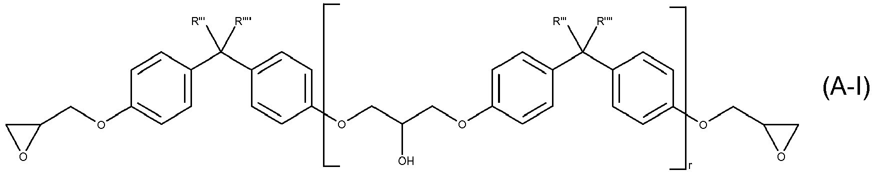

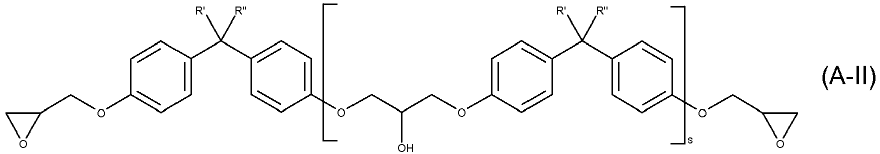

Hierbei stehen die Substituenten R', R", R'" und R"" unabhängig voneinander entweder für H oder CH₃. Weiterhin steht der Index r für einen Wert von 0 bis 1. Bevorzugt steht r für einen Wert von kleiner als 0,2. Weiterhin steht der Index s für einen Wert von > 1, insbesondere > 1,5, insbesondere von 2 bis 12.

Verbindungen der Formel (A-II) mit einem Index s zwischen 1 und 1,5 werden vom Fachmann als Semisolid-Epoxidharze bezeichnet. Für die hier vorliegende Erfindung werden sie ebenfalls als Festharze betrachtet. Bevorzugt sind jedoch Epoxid-Festharze im engeren Sinn, d.h. wo der Index s einen Wert von > 1,5 aufweist.

Derartige Epoxid-Festharze sind kommerziell erhältlich beispielsweise von Dow oder Huntsman oder Hexion. Handelsübliche Epoxid-Flüssigharze der Formel (A-I) wurden bereits vorstehend genannt.

Bevorzugt handelt es beim Diglycidylether der Formel (IV) um einen Epoxid-Flüssigharz, insbesondere um einen Diglycidylether von Bisphenol-A (BADGE), von Bisphenol-F sowie von Bisphenol-A/F.

Als Härter für Epoxidharzzusammensetzungen gelten in einer Ausführungsform insbesondere Polyamine, Polymercaptane, Polyamidoamine, aminofunktionelle Polyamin/Polyepoxid-Addukte, wie sie dem Fachmann als Härter bestens bekannt sind. In dieser Ausführungsform stellt die Zusammensetzung eine zweikomponentige Epoxidharzzusammensetzung dar, welche aus zwei Komponenten, d.h. einer ersten Komponente (K1) und einer zweiten Komponente (K2) besteht. Die erste Komponente (K1) umfasst zumindest den Schlagzähigkeitsmodifikator gemäß der Erfindung und gegebenenfalls ein zusätzliches Epoxid-Flüssigharz und/oder Epoxid-Festharz (A). Die zweite Komponente (K2) umfasst zumindest einen Härter für Epoxidharze. Die erste Komponente (K1) und die zweite Komponente (K2) werden je in einem individuellen Behälter aufbewahrt. Erst beim Zeitpunkt des Gebrauchs werden die zwei Komponenten miteinander gemischt und die reaktiven Bestandteile reagieren miteinander und führen so zu einer Vernetzung der Zusammensetzung. Derartige zweikomponentige Epoxidharzzusammensetzungen sind bereits bei tiefen Temperaturen, typischerweise zwischen 0 °C bis 100 °C, insbesondere bei Raumtemperatur, aushärtbar. Bevorzugt sind daher kalthärtende zweikomponentige Epoxidharzzusammensetzungen, die bevorzugt unter 100°C, bevorzugter von 0°C bis 80°C, besonders bevorzugt bei 10°C bis 60°C, insbesondere etwa bei Raumtemperatur (15°C bis 30°C), aushärtbar sind. In dieser Ausführungsform erfolgt die Härtung durch eine Additionsreaktion zwischen Härter und der in der Zusammensetzung vorhandenen Epoxidgruppen aufweisenden Verbindungen. Somit ist es in dieser Ausführungsform besonders vorteilhaft, wenn die Menge des Härters in der gesamten Zusammensetzung so bemessen ist, dass die Epoxid-reaktiven Gruppen in einem stöchiometrischen Verhältnis zu den Epoxid-Gruppen stehen.

In einer alternativen Ausführungsform, insbesondere für die einkomponentige Zusammensetzung, stellt der Härter für Epoxidharze einen dar, welcher durch erhöhte Temperatur aktiviert wird. In dieser Ausführungsform stellt die Zusammensetzung eine hitzehärtende Epoxidharzzusammensetzung dar. Unter "erhöhter Temperatur" wird in diesem Dokument in der Regel eine Temperatur über 100 °C, insbesondere zwischen 110 °C und 200 °C, verstanden. Beim Härter für Epoxidharze, welcher durch erhöhte Temperatur aktiviert wird, handelt es sich vorzugsweise um einen Härter, welcher ausgewählt ist aus der Gruppe bestehend aus Dicyandiamid, Guanamine, Guanidine, Aminoguanidine und deren Derivate. Weiterhin möglich sind beschleunigend wirksame Härter, wie substituierte Harnstoffe, wie beispielsweise 3-Chlor-4-methylphenylharnstoff (Chlortoluron), oder Phenyldimethylharnstoffe, insbesondere p-Chlorphenyl-N,N-dimethylharnstoff (Monuron), 3-Phenyl-1,1-dimethylharnstoff (Fenuron) oder 3,4-Dichlorphenyl-N,N-dimethylharnstoff (Diuron) aber auch aliphatisch substituierte Harnstoffe. Weiterhin können Verbindungen der Klasse der Imidazole, wie 2-Isopropylimidazol oder 2-Hydroxy-N-(2-(2-(2-hydroxyphenyl)-4,5-dihydroimidazol-1-yl)ethyl)benzamid und Amin-Komplexe eingesetzt werden.

Bevorzugt handelt es sich beim dem durch Hitze aktivierbaren Härter um einen Härter, welcher ausgewählt ist aus der Gruppe bestehend aus Dicyandiamid, Guanamine, Guanidine, Aminoguanidine und deren Derivate; substituierte Harnstoffe, insbesondere 3-Chlor-4-methylphenylharnstoff (Chlortoluron), oder Phenyldimethylharnstoffe, insbesondere p-Chlorphenyl-N,N-dimethylharnstoff (Monuron), 3-Phenyl-1,1-dimethylharnstoff (Fenuron), 3,4-Dichlorphenyl-N,N-dimethylharnstoff (Diuron) oder auch aliphatisch substituierte Harnstoffe, sowie Imidazole und Amin-Komplexe. Besonders bevorzugt als Härter ist Dicyandiamid.

Vorteilhaft beträgt der Gesamtanteil des Härters für Epoxidharze, welcher durch erhöhte Temperatur aktiviert wird, 0,5 bis 12 Gewichts-%, vorzugsweise 1 bis 8 Gewichts-%, bezogen auf das Gewicht der gesamten Zusammensetzung.

Bevorzugt ist, dass die Zusammensetzung weiterhin mindestens einen zusätzlichen optionalen Schlagzähigkeitsmodifikator (SM) umfasst, welcher verschieden von den bereits beschriebenen erfindungsgemäßen Epoxid-terminierten Schlagzähigkeitsmodifikator ist. Die zusätzlichen Schlagzähigkeitsmodifikatoren (SM) können fest oder flüssig sein.

In einer Ausführungsform ist dieser zusätzliche Schlagzähigkeitsmodifikator (SM) ein Flüssigkautschuk (SM1), welcher ein carboxyl- oder epoxidterminiertes Acrylnitril/ Butadien-Copolymer oder ein Derivat davon ist. Derartige Flüssigkautschuke sind beispielsweise unter dem Namen Hypro^{®} (früher Hycar^{®}) CTBN und CTBNX und ETBN von Emerald Performance Materials LLC kommerziell erhältlich. Als Derivate sind insbesondere Epoxidgruppen aufweisende Elastomer-modifizierte Präpolymere, wie sie unter der Produktlinie Polydis^{®}, vorzugsweise aus der Produktlinie Polydis^{®} 36.., von der Firma Struktol^{®} (Schill + Seilacher Gruppe, Deutschland) oder unter der Produktlinie Albipox^{®} (Evonik Hanse GmbH, Deutschland) kommerziell vertrieben werden, geeignet. In einer weiteren Ausführungsform ist der Schlagzähigkeitsmodifikator (SM) ein Polyacrylatflüssigkautschuk (SM1), der mit flüssigen Epoxidharzen vollständig mischbar ist und sich erst beim Aushärten der Epoxidharzmatrix zu Mikrotröpfchen entmischt. Derartige Polyacrylatflüssigkautschuke sind beispielsweise unter der Bezeichnung 20208-XPA von Rohm und Haas erhältlich.

Es ist dem Fachmann klar, dass natürlich auch Mischungen von Flüssigkautschuken verwendet werden können, insbesondere Mischungen von Carboxyl- oder Epoxid-terminierten Acrylnitril/Butadien-Copolymeren oder Derivaten davon mit Epoxid-terminierten Polyurethanpräpolymeren.

In einer weiteren Ausführungsform kann der zusätzliche Schlagzähigkeitsmodifikator (SM) ein fester Schlagzähigkeitsmodifikator sein, welcher ein organisches ionenausgetauschtes Schichtmineral ist. Das ionengetauschte Schichtmineral kann entweder ein kationengetauschtes oder ein anionengetauschtes Schichtmineral sein. Es ist auch möglich, dass die Zusammensetzung gleichzeitig ein kationengetauschtes Schichtmineral und ein anionengetauschtes Schichtmineral enthält.

Das kationengetauschte Schichtmineral wird hierbei erhalten aus einem Schichtmineral, bei welchem zumindest ein Teil der Kationen durch organische Kationen ausgetauscht worden sind. Beispiele für derartige kationengetauschte Schichtmineralien sind insbesondere diejenigen, welche in US 5707439 oder in US 6197849 erwähnt sind. Dort ist auch das Verfahren zur Herstellung dieser kationengetauschten Schichtminerale beschrieben. Bevorzugt als Schichtmineral ist ein Schichtsilikat. Insbesondere bevorzugt handelt es sich beim Schichtmineral um ein Phyllosilikat, wie sie in US 6197849, Spalte 2, Zeile 38, bis Spalte 3, Zeile 5, beschrieben sind, insbesondere um einen Bentonit. Als besonders geeignet haben sich Schichtmineral wie Kaolinit oder ein Montmorillionit oder ein Hectorit oder ein Illit erwiesen. Zumindest ein Teil der Kationen des Schichtminerals wird durch organische Kationen ersetzt. Beispiele für derartige Kationen sind n-Octylammonium, Trimethyldodecylammonium, Dimethyldodecylammonium oder Bis(hydroxyethyl)octadecylammonium oder ähnliche Derivate von Aminen, die aus natürlichen Fetten und Ölen gewonnen werden können; oder Guanidiniumkationen oder Amidiniumkationen;oder Kationen der N-substituierten Derivate von Pyrrolidin, Piperidin, Piperazin, Morpholin, Thiomorpholin; oder Kationen von 1,4-Diazobicyclo[2.2.2]octan (DABCO) und 1-Azobicyclo[2.2.2]octan; oder Kationen von N-substituierten Derivaten von Pyridin, Pyrrol, Imidazol, Oxazol, Pyrimidin, Chinolin, Isochinoilin, Pyrazin, Indol, Bezimidazol, Benzoxaziol, Thiazol Phenazin und 2,2'-Bipyridin. Weiterhin sind geeignet cyclische Amidiniumkationen, insbesondere solche, wie sie in US 6197849 in Spalte 3, Zeile 6, bis Spalte 4, Zeile 67, offenbart werden.

Bevorzugte kationengetauschte Schichtminerale sind dem Fachmann unter der Bezeichnung Organoclay oder Nanoclay bekannt und sind kommerziell zum Beispiel unter den Gruppennamen Tixogel^{®} oder Nanofil^{®} (Südchemie), Cloisite^{®} (Southern Clay Products) oder Nanomer^{®} (Nanocor Inc.) oder Garmite^{®} (Rockwood) erhältlich.

Das anionengetauschte Schichtmineral wird erhalten aus einem Schichtmineral, bei welchem zumindest ein Teil der Anionen durch organische Anionen ausgetauscht worden sind. Ein Beispiel für ein anionengetauschtes Schichtmineral ist ein Hydrotalcit, bei dem zumindest ein Teil der Carbonat-Anionen der Zwischenschichten durch organische Anionen ausgetauscht wurden.

In einer weiteren Ausführungsform ist der zusätzliche Schlagzähigkeitsmodifikator (SM) ein fester Schlagzähigkeitsmodifikator, welcher ein Blockcopolymer (SM2) ist. Das Blockcopolymer (SM2) wird erhalten aus einer anionischen oder kontrollierten radikalischen Polymerisation von Methacrylsäureester mit mindestens einem weiteren eine olefinisch Doppelbindung aufweisenden Monomer. Als eine olefinische Doppelbindung aufweisende Monomere sind insbesondere solche bevorzugt, bei denen die Doppelbindung unmittelbar mit einem Heteroatom oder mit mindestens einer weiteren Doppelbindung konjugiert ist. Insbesondere sind Monomere geeignet, welche ausgewählt sind aus der Gruppe umfassend Styrol, Butadien, Acrylnitril und Vinylacetat. Bevorzugt sind Acrylat-Styrol-Acrylsäure (ASA)-Copolymere, erhältlich z.B. unter dem Namen GELOY^{®} 1020 von GE Plastics. Besonders bevorzugte Blockcopolymere (SM2) sind Blockcopolymere aus Methacrylsäuremethylester, Styrol und Butadien. Derartige Blockcopolymere sind beispielsweise als Triblockcopolymere unter der Gruppenbezeichnung SBM von Arkema erhältlich.

In einer weiteren Ausführungsform ist der zusätzliche Schlagzähigkeitsmodifikator (SM) ein Core-Shell-Polymer (SM3). Core-Shell-Polymere bestehen aus einem elastischen Kernpolymer und einem starren Schalen-Polymer. Insbesondere geeignete Core-Shell-Polymere bestehen aus einem Kern (Core) aus elastischem Acrylat- oder Butadien-Polymer, den eine starre Schale (Shell) eines starren thermoplastischen Polymers umhüllt. Diese Core-Shell-Struktur bildet sich entweder spontan durch Entmischen eines Blockcopolymers oder ist durch die Polymerisationsführung als Latex oder Suspensions-polymerisation mit nachfolgender Pfropfung vorgegeben. Bevorzugte Core-Shell-Polymere sind sogenannte MBS-Polymere, welche kommerziell unter dem Handelsnamen Clearstrength^{®} von Arkema, Paraloid^{®} von Dow (früher Rohm und Haas) oder F-351^{®} von Zeon erhältlich sind.

Besonders bevorzugt sind Core-Shell Polymerpartikel, die bereits als getrockneter Polymerlatex vorliegen. Beispiele hierfür sind GENIOPERL^{®} M23A von Wacker mit Polysiloxankern und Acrylatschale, strahlungsvernetzte Kautschukpartikel der NEP Reihe, hergestellt von Eliokem, oder Nanoprene^{®} von Lanxess oder Paraloid^{®} EXL von Dow. Weitere vergleichbare Beispiele für Core-Shell-Polymere werden unter dem Namen Albidur^{®} von Evonik Hanse GmbH, Deutschland, angeboten. Ebenso geeignet sind nanoskalige Silikate in Epoxid-Matrix, wie sie unter dem Handelnamen Nonopox von Evonik Hanse GmbH, Deutschland, angeboten werden.

In einer weiteren Ausführungsform ist der zusätzliche Schlagzähigkeitsmodifikator (SM) ein Umsetzungsprodukt (SM4) eines carboxylierten festen Nitrilkautschuks mit überschüssigem Epoxidharz.

Der Anteil des oder der vorstehend beschriebenen zusätzlichen Schlagzähigkeitsmodifikatoren (SM), der/die von dem erfindungsgemäßen Epoxid-terminierten Schlagzähigkeitsmodifikator verschieden ist, beträgt z.B. 0 bis 45 Gew.-%, vorzugsweise 1 bis 45 Gew.-%, insbesondere 3 bis 35 Gew.-%, bezogen auf das Gewicht der gesamten Zusammensetzung.

Die Zusammensetzung kann selbstverständlich noch andere Bestandteile umfassen. Insbesondere sind dies Füllstoff (F), Reaktivverdünner (G), wie Epoxidgruppentragende Reaktivverdünner, Katalysatoren, Stabilisatoren, insbesondere Hitze- und/ oder Lichtstabilisatoren, Thixotropiermittel, Weichmacher, Lösungsmittel, mineralische oder organische Füllstoffe, Treibmittel, Farbstoffe und Pigmente, Korrosionsschutzmittel, Tenside, Entschäumer und Haftvermittler. Für diese Additive können alle in der Technik bekannten in den üblichen Mengen eingesetzt werden.

Bei den Füllstoffen (F) handelt es sich z.B. bevorzugt um Glimmer, Talk, Kaolin, Wollastonit, Feldspat, Syenith, Chlorit, Bentonit, Montmorillonit, Calciumcarbonat (gefällt oder gemahlen), Dolomit, Quarz, Kieselsäuren (pyrogen oder gefällt), Cristobalit, Calciumoxid, Aluminiumhydroxid, Magnesiumoxid, Keramikhohlkugeln, Glashohlkugeln, organische Hohlkugeln, Glaskugeln, Farbpigmente. Als Füllstoff (F) sind sowohl die organisch beschichteten als auch die unbeschichteten kommerziell erhältlichen und dem Fachmann bekannten Formen gemeint.

Vorteilhaft beträgt der Gesamtanteil des gesamten Füllstoffs (F) 3 bis 50 Gewichts-%, vorzugsweise 5 bis 35 Gewichts-%, insbesondere 5 bis 25 Gewichts-%, bezogen auf das Gewicht der gesamten Zusammensetzung.

Bei den Reaktivverdünnern (G) handelt es sich insbesondere um:
- Glycidylether von monofunktionellen gesättigten oder ungesättigten, verzweigten oder unverzweigten, zyklischen oder offenkettigen C₄-C₃₀-Alkoholen, insbesondere ausgewählt aus der Gruppe bestehend aus Butanolglycidylether, Hexanolglycidylether, 2-Ethylhexanolglycidylether, Allylglycidylether, Tetrahydrofurfuryl- und Furfurylglycidylether, Trimethoxysilylglycidylether.
- Glycidylether von difunktionellen gesättigten oder ungesättigten, verzweigten oder unverzweigten, zyklischen oder offenkettigen C₂-C₃₀-Alkoholen, insbesondere ausgewählt aus der Gruppe bestehend aus Ethylenglykol-, Butandiol-, Hexandiol-, Octandiolgylcidylether, Cyclohexandimethanoldigylcidylether und Neopentylglycoldiglycidylether.
- Glycidylether von tri- oder polyfunktionellen, gesättigten oder ungesättigten, verzweigten oder unverzweigten, zyklischen oder offenkettigen Alkoholen wie epoxidiertes Rhizinusöl, epoxidiertes Trimethylolpropan, epoxidiertes Pentaerythrol oder Polyglycidylether von aliphatischen Polyolen wie Sorbitol, Glycerin oder Trimethylolpropan.
- Glycidylether von Phenol- und Anilinverbindungen, insbesondere ausgewählt aus der Gruppe bestehend aus Phenylglycidylether, Kresylglycidylether, p-tert.-Butylphenylglycidylether, Nonylphenolglycidylether, 3-n-Pentadecenylglycidylether (aus Cashewnuss-Schalen-Öl), N, N-Diglycidylanilin und Triglycdiyl von p-Aminophenol.
- Epoxidierte Amine wie N, N-Diglycidylcyclohexylamin.
- Epoxidierte Mono- oder Dicarbonsäuren insbesondere ausgewählt aus der Gruppe bestehend aus Neodecansäureglycidylester, Methacrylsäureglycidylester, Benzoesäureglycidylester, Phthalsäure-, Tetra- und Hexahydrophthalsäurediglycidylester und Diglycidylester von dimeren Fettsäuren sowie Terephthalsäure- und Trimelitsäuregylcidylester.
- Epoxidierte di- oder trifunktionelle, nieder- bis hochmolekulare Polyetherpolyole, insbesondere Polyethylenglycoldiglycidylether oder Polypropyleneglycol-diglycidylether.

Besonders bevorzugt sind Hexandioldiglycidylether, Kresylglycidylether, p-tert.-Butylphenylglycidylether, Polypropylenglycoldiglycidylether und Polyethylenglycoldiglycidylether.

Vorteilhaft beträgt der Gesamtanteil des Reaktivverdünners (G), falls verwendet, 0,1 bis 20 Gewichts-%, vorzugsweise 1 bis 8 Gewichts-%, bezogen auf das Gewicht der gesamten Zusammensetzung.

Als Weichmacher eignen sich z.B. Phenolalkylsulfonsäureester oder Benzolsulfonsäure-N-butylamid, die als Mesamoll^{®} bzw. Dellatol BBS von Bayer erhältlich sind. Als Stabilisatoren eignen sich z.B. gegebenenfalls substituierte Phenole, wie Butylhydroxytoluol (BHT) oder Wingstay^{®} T (Elikem), sterisch gehinderte Amine oder N-Oxylverbindungen wie TEMPO (Evonik).

In einer besonderen Ausführungsform enthält die Zusammensetzung ferner mindestens ein physikalisches oder chemisches Treibmittel, insbesondere in einer Menge von 0,1 bis 3 Gewichts-%, bezogen auf das Gewicht der Zusammensetzung. Bevorzugte Treibmittel sind chemische Treibmittel, welche beim Erhitzen, insbesondere auf eine Temperatur von 100 bis 200 °C, ein Gas freisetzen. Es kann sich um exotherme Treibmittel handeln, wie z.B. Azoverbindungungen, Hydrazinderivate, Semicarbazide oder Tetrazole. Bevorzugt sind Azodicarbonamid und Oxy-bis(benzolsulfonylhydrazid), die bei der Zersetzung Energie freisetzen. Weiterhin geeignet sind auch endotherme Treibmittel, wie beispielsweise Natriumbicarbonat/Citronensäure-Mischungen. Derartige chemische Treibmittel sind beispielsweise unter dem Namen Celogen^{®} der Firma Chemtura erhältlich. Ebenfalls geeignet sind physikalische Treibmittel, die unter dem Handelsnamen Expancel^{®} der Firma Akzo Nobel vertrieben werden. Expancel^{®} und Celogen^{®} sind besonders bevorzugt.

Beispielhaft seien noch bevorzugte Zusammensetzungen und Anteile davon für 1K und 2K Epoxidharz-Klebstoffe mit dem Epoxidgruppen-terminierten Schlagzähmodifikator aufgeführt. Die Prozentangaben beziehen sich auf das Gewicht.

### 1 K Klebstoffe:

A) 0 - 60% Basis-Epoxidharze (Flüssigharz, Festharz, epoxidierte Novolake usw.)
B) 20 - 80%, bevorzugt 30-60% des erfindungsgemäßen Epoxid-terminierten PU-Polymers in Mischung mit Flüssigharzen (BADGE etc.)
C) 0 - 40%, bevorzugt 10-25% blockiertes PU-Polymer
D) 0 - 30%, bevorzugt 5-20% CTBN-Derivat (Hycar-Addukte z.B. mit BADGE)
E) 0 - 15%, bevorzugt 2,5-7,5% Reaktivverdünner (z.B. Hexandioldiglycidylether)
F) 0 - 25% weitere unreaktive Flexibilisatoren Kautschuk-Partikel (SM2), nanoskalige Core-Shell- (SM3) oder auch HAT-Paste (Addukt MDI und Monobutylamin, vgl. EP 1152019)
G) 2 - 10%, bevorzugt 3-4,5% Härter und Katalysatoren
H) 10- 40%, bevorzugt 15-25% organische oder mineralische Füllstoffe
I) Additive und Hilfsstoffe (z.B. Fließmittel, Pigmente, Haftvermittler)

### 2K Klebstoffe:

### A-Komponente:

A) 5 - 80%, bevorzugt 30-60% des misch-/teilblockierten Polymers in Mischung mit Flüssigharzen (BADGE etc.)
B) 0 - 50% Flüssigharz (BADGE etc.)
C) 0 - 20% Festharz
D) 0- 10% Reaktivverdünner (z.B. Hexandioldiglycidylether)
E) 0 - 25% CTBN-Derivat (z.B. mit BADGE)
F) 0 - 25% weitere unreaktive Flexibilisatoren Kautschuk-Partikel (SM2), nanoskalige Core-Shell- (SM3) oder auch HAT-Paste (Addukt MDI und Monobutylamin, EP 1152019)
G) 0 - 50% organische oder mineralische Füllstoffe
H) Additive und Hilfsstoffe (z.B. Fließmittel, Pigmente, Haftvermittler)

### B-Komponente:

A) 0 - 60% Aliphatische, cycloaliphatische Polyamine (und/oder Epoxy-Addukte davon)
B) 0-60% Polyoxyalkylenamine
C) 0 - 60% Polyamide/Imidazoline (und/oder Epoxy-Addukte davon)
D) 0 - 60% Amidoamine (und/oder Epoxy-Addukte davon)
E) 0 - 60% Polyoxyalkylen Polyamide (und/oder Epoxy-Addukte davon)
F) 0 - 60% Mannich Basen oder Phenalkamine (und/oder Epoxy-Addukte davon)
G) 0 - 10% Tertiäre Amine
H) 0 - 50% organische oder mineralische Füllstoffe
I) Additive und Hilfsstoffe (z.B. Fließmittel, Pigmente, Haftvermittler)

Bevorzugte Polyamine für den Härter (B-Komponente) sind Polyetheramine wie 4,7,10-Trioxa-1,13-tridecanediamin, 4,9-Dioxadodecan-1,12-diamine, Addukte wie 4,7,10-Trioxa-1,13-tridecandiamin, 4,9-Dioxadodecan-1,12-diamin, und Polyoxyalkylenamine (z. B. Jeffamin^{®} D400). Phenalkamine wie Aradur^{®} 3460, rein aliphatische Amine, oder gemischt aliphatische Polyetherstrukturen wie im Jeffamin RFD270.

Bei der zweikomponentigen Epoxidharzzusammensetzung erfolgt nach dem Mischen der ersten Komponente (K1) und der zweiten Komponente (K2) eine Reaktion, welches zum Aushärten der Zusammensetzung führt. In einer weiteren Ausführungsform, nämlich der einkomponentigen hitzehärtenden Epoxidharzzusammensetzung, erfolgt die Aushärtung durch Erhitzen der Zusammensetzung auf eine Temperatur, welche über der Hitzeaktivierung des thermisch aktivierbaren Härters liegt. Diese Aushärtetemperatur ist vorzugsweise eine Temperatur im Bereich von 100 °C bis 220 °C, vorzugsweise 120 bis 200 °C.

Die Zusammensetzung eignet sich bestens als Klebstoff und wird bevorzugt zum Verkleben von mindestens zwei Substraten verwendet. Die Klebstoffe eignen sich insbesondere für Automobile oder An- oder Einbaumodule für Fahrzeuge. Ferner eignen sich die erfindungsgemäßen Zusammensetzungen auch für andere Anwendungsgebiete. Besonders zu erwähnen sind verwandte Anwendungen im Transportmittelbau wie Schiffe, Lastwagen, Busse oder Schienenfahrzeuge, im Bau von Gebrauchsgütern wie beispielsweise Waschmaschinen, aber auch im Bausektor, beispielsweise als versteifende Strukturklebstoffe. Es können mit einer erfindungsgemäßen Zusammensetzung neben Klebstoffen auch Dichtmassen oder Beschichtungen realisiert werden.

Bei den zu verklebenden oder beschichtenden Materialien handelt es sich bevorzugt um Metalle und Kunststoffe wie ABS, Polyamid, Polyphenylenether, Verbundmaterialien wie SMC, ungesättigte Polyester GFK, Epoxid- oder Acrylatverbundwerkstoffe. Bevorzugt ist die Anwendung, bei der zumindest ein Material ein Metall ist. Als besonders bevorzugte Verwendung gilt das Verkleben von gleichen oder verschiedenen Metallen, insbesondere im Rohbau in der Automobilindustrie. Die bevorzugten Metalle sind vor allem Stahl insbesondere elektrolytisch verzinkter, feuerverzinkter, beölter Stahl, Bonazink-beschichteter Stahl, und nachträglich phosphatierter Stahl, sowie Aluminium insbesondere in den im Autobau typischerweise vorkommenden Varianten.

### Beispiele

Im Folgenden werden einige Beispiele aufgeführt, welche die Erfindung weiter veranschaulichen, den Umfang der Erfindung aber in keiner Weise beschränken sollen. Sofern nicht anders angegeben, beziehen sich alle Anteile und Prozentsätze auf das Gewicht.

**Tabelle 1**

| | | |
|---|---|---|
| PolyTHF^{®} 2000 | Polyol, (difunktionelles Polybutylenglykol mit einer Molmasse von 2000 g/mol) | BASF |
| Poly BD^{®} R45V | Polyol, hydroxyl terminiertes Polybutadien mit einer Molmasse von 2800 g/mol, OH-Funktionalität ca. 2,4-2,6 | Cray Valley |
| Krasol^{®} LBH-P 2000 | Hydroxyl-terminiertes Polybutadien, OH-Funktionalität ca. 1,9 | Cray Valley |
| Ionol^{®} CP(=BHT) | Stabilisator | Evonik |
| Isophorondiisocyanat (=IPDI) | Isocyanat | Evonik |
| Epikote^{®} 828LVEL | Standard Bisphenol-A-Epoxidharz, Epoxid-Flüssigharz hergestellt aus Bisphenol-A und Epichlorhydrin, Mw ≤ 700 | Hexion |
| D.E.R.^{®} 331 | Standard Bisphenol-A-Epoxidharz | Dow |
| Dibutylzinndilaurat (DBTL) | Katalysator | Thorson |
| 4-Methylphthalsäureanhydrid 95% | Glykolfänger | Sigma-Aldrich, Art Nr. 348317 |
| Winnofil^{®} SPM | Calciumcarbonat | Solvay |
| HDK^{®}18 | pyrogene Kieselsäure | Wacker |
| Tremin® 939-100 ESST | Wollastonit, mit Epoxysilan behandelt | Quarzwerke |
| A-187 | Epoxysilan | Silquest |

### Beispiele 1 - 6 und Vergleichsbeispiele 1 und 2

PolyTHF^{®} 2000 und Krasol^{®}LBH-P 2000 in den nachstehend in Tabelle 3 angegebenen Gewichtsverhältnissen, Epikote^{®}828 LVEL (1 Äquivalent bezogen auf die Isocyanantgruppen) und Methylphthalsäureanhydrid (0,75 Gew.-% bezogen auf Epikote) wurden 1 Stunde im Vakuum bei 90 °C getrocknet. Anschließend wurden IPDI (1,0 Äquivalent) und Dibutylzinndilaurat (DBTL) als Katalysator zugegeben. Die Mischung wurde 1 h bei 110 °C umgesetzt. Danach wurde ein Katalysator aus einer Bismutverbindung und einer aromatischen Stickstoffverbindung zugegeben und weiter bei 110°C umgesetzt, bis der freie NCO-Gehalt weniger als 0,25% betrug.

Die so erhaltenen Schlagzähigkeitsmodifikatoren 1-8 wurden als Toughener 1-8 zur Herstellung der 2K Epoxyklebstoffe gemäß den Beispielen 1 bis 6 und Vergleichsbeispielen 1 und 2 mit folgender Zusammensetzung gemäß Tabelle 2 eingesetzt. Im Vergleichbeispiel 1 (Toughener 7) wurde nur PolyTHF^{®} 2000 und kein Krasol^{®}LBH-P 2000 verwendet (Gewichtsverhältnis 1/-).

**Tabelle 2**

| A-Komponente | Anteil [Gew.-%] |
|---|---|
| Epoxidharz | 28 |
| Toughener 1-8 | 60 |
| HDK^{®}18 | 5 |
| A-187 | 2 |
| Tremin^{®}939-100 ESST | 5 |
| | |

| B-Komponente | Anteil [Gew.-%] |
|---|---|
| Ancamine^{®} 1922A | 65 |
| Ancamine^{®} K54 | 10 |
| Winnofil^{®} SPM | 20 |
| HDK^{®}18 | 5 |

Die erhaltenen 2K Epoxyklebstoffe wurden auf ihre mechanischen Eigenschaften geprüft. Die Komponenten A und B wurden gemischt und gemäß den nachstehenden Angaben auf die Substrate aufgetragen. Die Härtung erfolgte 4 h bei RT (23°C) + 30 min bei 85°C bzw. 7 Tage bei RT.

Die Bestimmung der Zugfestigkeit (ZF), Zugscherfestigkeit (ZSF) und des Schlagschälwiderstands (I-Peel) erfolgte gemäß den nachstehend aufgeführten Methoden. Alle Substrate wurden mit Heptan gereinigt. Die Klebschicht hatte jeweils eine Dicke von 0,3 mm. Die Ergebnisse sind in Tabelle 3 zusammengestellt.

### Zugscherfestigkeit (ZSF) (DIN EN 1465)

Probenkörper wurden aus der beschrieben Beispiel-Klebstoffzusammensetzung und mit elektrolytisch verzinktem H380 Stahl (EloZn) mit dem Mass 100 x 25 x 0,8 mm hergestellt. Dabei betrug die Klebfläche 25 x 10 mm bei einer Schichtdicke von 0,3 mm. Die Zuggeschwindigkeit betrug 10mm/min.

### Dynamischer Schlagschälwiderstand (I-Peel, ISO 11343)

Die Probenkörper wurden aus der beschriebenen Beispiel-Klebstoffzusammensetzung und mit elektrolytisch verzinktem DC04 Stahl (EloZn) mit dem Mass 90 x 20 x 0,8mm hergestellt, dabei betrug die Klebfläche 20 x 30mm bei einer Schichtdicke von 0,3mm. Die Messung des Schlagschälwiderstands erfolgte jeweils bei den angegebenen Temperaturen als Dreifachbestimmung. Die Schlaggeschwindigkeit betrug 2 m/s. Als Kraft pro Länge wird das Integral unter der Messkurve (von 25 bis 90% gemäß ISO 11343) angegeben.

### Zugfestigkeit (ZF) DIN EN ISO 527)

Eine Klebstoffprobe wurde zwischen zwei Teflonpapieren auf eine Schichtdicke von 2mm verpresst. Nach Aushärtung wurden die Teflonpapiere entfernt und die Probekörper nach DIN-Norm Zustand ausgestanzt. Die Prüfkörper wurden unter Normklima mit einer Zuggeschwindigkeit von 2 mm/min gemessen. Die Zugfestigkeit wurde gemäss DIN EN ISO 527 bestimmt.

**Tabelle 3**

| | Bsp. 1 | Bsp. 2 | Bsp. 3 | Bsp. 4 | Bsp. 5 | Bsp. 6 | Vgl.-bsp. 1 | Vgl.-bsp. 2 |
|---|---|---|---|---|---|---|---|---|
| Toughener | 1 | 2 | 3 | 4 | 5 | 6 | 7 | 8 |
| pTHF/Krasol*** | 7/3 | 6/4 | 5/5 | 4/6 | 3/7 | 2/8 | 1/- | 7,25/2,75 |
| ZF [MPa]* | 28,0 | 23,3 | 26,1 | 24,8 | 24,0 | 23,2 | 28,2 | 33 |
| E-Mod. (0,05-0,25%) [MPa]* | 1390 | 1320 | 1150 | 900 | 840 | 880 | 1659 | 1620 |
| ZSF [MPa]* | 29,4 | 28,2 | 30,2 | 28,8 | 28,4 | 31,1 | 17,1 | 31,5 |
| I-Peel@RT* [N/mm] | 24,4 | 39,3 | 25,9 | 28,8 | 24,7 | 29,4 | 16,2 | 21,6 |
| I-Peel@RT** [N/mm] | 39,8 | 43,0 | 45,4 | 45,3 | 39,3 | 40,8 | 7,5 | n.b.**** |
| I-Peel@-30°C* [N/mm] | 7,0 | 8,5 | 9,7 | 10,7 | 10,2 | 10,5 | 3,7 | 6,2 |

| | | | | | | | | |
|---|---|---|---|---|---|---|---|---|
| *Härtung: 4h RT + 30 min 85°C **Härtung: 7d RT ***Gewichtsverhältnis ****nicht bestimmt | | | | | | | | |

Mischungen für die Beispiele 1-6, die Polyetherpolyol und Hydroxyl-terminierten Kautschuk enthielten, waren von sehr flüssiger Konsistenz. Die Herstellung konnte daher in einem einstufigen Verfahren durchgeführt werden. Die gemessenen mechanischen Eigenschaften der gehärteten Klebstoffe sind sehr gut. Durch höhere Anteile an Hydroxyl-terminiertem Kautschuk konnten zusätzlich Verbesserungen in dem Schlagschälwiderstand erreicht werden. Das Beispiel 3 mit einem 1:1 Verhältnis ist besonders gut, da die sich daraus ergebenden mechanischen Ergebnisse am vorteilhaftesten sind.

### Beispiel 7

Das Verfahren gemäß der Beispiele 1 bis 6 wurde wiederholt, außer dass anstelle von Krasol^{®}LBH-P 2000 PolyBd^{®}R45V in den nachstehend in Tabelle 4 angegebenen Gewichtsverhältnissen eingesetzt wurde, um den Toughener 8 zu bilden. Der erhaltene Klebstoff wurde auf die gleiche Weise wie in den Beispielen 1 bis 6 geprüft. Die Ergebnisse sind in Tabelle 4 aufgeführt.

**Tabelle 4**

| | Bsp. 7 |
|---|---|
| Toughener | 8 |
| pTHF/PolyBd*** | 6/4 |
| ZF [MPa]* | 22,4 |
| E-Mod. (0,05-0,25%) [MPa]* | 781 |
| ZSF [MPa]* | 22,6 |
| I-Peel@RT* [N/mm] | 30,1 |
| I-Peel@RT* [N/mm] | 40,5 |
| I-Peel@-30°C* [N/mm] | 4,1 |

| | |
|---|---|
| *Härtung: 4h RT + 30 min 85°C **Härtung: 7d RT ***Gewichtsverhältnis | |

### Beispiele 8 bis 12

Das Verfahren gemäß der Beispiele 1 bis 6 wurde wiederholt, außer dass PolyTHF^{®} 2000, Krasol^{®}LBH-P 2000 und PolyBd^{®}R45V in den nachstehend in Tabelle 5 angegebenen Gewichtsverhältnissen eingesetzt wurde, um die Toughener 9 bis 13 zu bilden. Der erhaltene Klebstoff wurde auf ähnliche Weise wie in den Beispielen 1 bis 6 geprüft. Die Ergebnisse sind in Tabelle 5 aufgeführt.

**Tabelle 5**

| | Bsp. 8 | Bsp. 9 | Bsp. 10 | Bsp. 11 | Bsp. 12 |
|---|---|---|---|---|---|
| Toughener | 9 | 10 | 11 | 12 | 13 |
| pTHF/Krasol/PolyBd*** | 60/0/40 | 60/40/0 | 60/40/10 | 50/25/25 | 50/40/10 |
| Viskosität [Pa.s], 25°C | 593 | 428 | 316 | 338 | 316 |
| ZF [MPa]* | 22,4 | 23,3 | 26,0 | 24,0 | 26,0 |
| E-Mod. (0,05-0,25%) [MPa]* | 860 | 1440 | 1455 | 1181 | 1455 |
| ZSF [MPa]* | 22,6 | 28,2 | 27,3 | 23,3 | 27,7 |
| BD [%] | 13 | 10 | 4 | 4 | 4 |
| I-Peel@RT* [N/mm] | 30,1 | 39,3 | 31,7 | 24,9 | 31,7 |
| I-Peel@RT* [N/mm] | 40,5 | 43,0 | 35,6 | 22,3 | 35,6 |
| I-Peel@-30°C* [N/mm] | 4,1 | 8,5 | 20,4 | 15,6 | 20,4 |

| | | | | | |
|---|---|---|---|---|---|
| *Härtung: 4h RT + 30 min 85°C **Härtung: 7d RT ***Gewichtsverhältnis | | | | | |

In Tabelle 5 ist zu sehen, dass bei Verwendung eines Schlagzähmodifikators, der nur PolyTHF und Krasol (Bsp. 9) enthält gegenüber einem PolyTHF/PolyBd Schlagzähmodifikators (Bsp. 8) die Crashperformance (IP-Peel) und das E-Modul zunehmen, während die Viskosität abnimmt. Eine Mischung von Krasol und PolyBd (Bsp. 10) zeigt zusätzlich zu einer weiteren Abnahme in der Viskosität auch noch die positive Zunahme des IP-Wertes bei -30 °C.

Tabelle 5 zeigt ferner den positiven Effekt von 10% PolyBd Zugabe zu einem PolyTHF/Krasol Zähmodifikators (Bsp. 12). Bei 25% PolyBd Zugabe (Bsp. 11) nehmen sowohl die Crashperformance als auch das E-Modul ab und die Viskosität etwas zu.

### Beispiele 13 und 14

Es wurden Schlagzähigkeitsmodifikatoren wie in den Beispielen 1 bis 6 hergestellt, außer dass als Polyol eine Mischung von PolyTHF^{®} 2000 und PolyBd R45V (Beispiel 13) bzw. PolyTHF^{®} 2000 und Krasol LBH P3000 (Beispiel 14) eingesetzt wurde. Mit den erhaltenen Schlagzähigkeitsmodifikatoren wurden übliche 1K-Epoxidklebstoffe hergestellt und der I-Peel-Wert für verschiedene Temperaturen bestimmt, die in Tabelle 6 aufgeführt sind.

**Tabelle 6**

| | Bsp. 13 | Bsp. 14 |
|---|---|---|
| | PolyBd | Krasol |
| I-Peel [N/mm] bei | | |
| RT | 47,0 | 40,7 |
| 0°C | 44,3 | 37,6 |
| -15°C | 41,4 | 35,1 |
| -30°C | 38,3 | 30,1 |
| -40°C | 33,0 | 21,4 |
| -50°C | 21,8 | 14,1 |

In Tabelle 6 wird gezeigt, dass in einem 1-K Klebstoff das Krasol (Bsp. 14) einen negativen Effekt auf die Crashperformance gegenüber einem reinen PolyTHF/PolyBd Zähmodifikators (Bsp. 13) hat, während in Tabelle 5 in einem 2-K Klebstoff genau das Gegenteil der Fall ist und Krasol (Bsp. 9) einen positiven Effekt gegenüber dem PolyTHF/PolyBd Zähmodifikator (Bsp. 8) hat. Die Mischung (Bsp. 10) zeigt positive Auswirkungen vor allem bei RT.

### Herstellungsbeispiel 1: NCO-terminiertes Präpolymer 1

700,00 g PolyTHF 2000 (OH-Zahl 57,0 mg/g KOH), 700,00 g Poly BD R45V (OH-Zahl 43,7 mg/g KOH) und 7,00 g BHT als Stabilisator wurden 1 Stunde unter Vakuum bei 90 °C getrocknet. Anschließend wurden 280,54 g IPDI und 0,215 g Dibutylzinndilaurat (DBTL) zugegeben. Die Reaktion wurde 2 h unter Vakuum bei 90 °C durchgeführt: Gemessener freier NCO-Gehalt: 3,031% (theoretischer NCO-Gehalt: 3,090%).

### Herstellungsbeispiel 2: NCO-terminiertes Präpolymer 2

350,00 g PolyTHF 2000 (OH-Zahl 55,9 mg/g KOH), 350,00 g Poly BD R45V (OH-Zahl 46 mg/g KOH) und 3,5 g BHT als Stabilisator wurden 1 Stunde unter Vakuum bei 90 °C getrocknet. Anschließend wurden 111,15 g IPDI und 0,108 g DBTL zugegeben. Die Reaktion wurde 2 h unter Vakuum bei 90 °C durchgeführt: Gemessener freier NCO-Gehalt: 3,237% (theoretischer NCO-Gehalt: 3,119%).

### Beispiel 15

Epikote^{®} 828LVEL wurde 2 Stunden bei 90 °C unter Vakuum getrocknet. 120 g des in Herstellungsbeispiel 1 hergestellten NCO-terminierten Präpolymers 1 wurden in einem Gefäß vorgelegt. Hierzu wurden 428,565 g des getrockneten Epikote^{®} 828LVEL zugegeben. Anschließend wurden 1,071 g 4-Methylphthalsäureanhydrid (0,25 Gew.-% bezogen auf Epoxidharz) zugesetzt und dann wurde kurz gemischt. Die Mischung wurde mit 0,110 g DBTL versetzt und es wurde 2 Stunden im Vakuum bei 110°C umgesetzt.

### Beispiel 16

Epikote^{®} 828LVEL wurde 2 Stunden bei 90 °C unter Vakuum getrocknet. 120 g des in Herstellungsbeispiel 1 hergestellten NCO-terminierten Präpolymers 1 wurden in einem Gefäß vorgelegt. Hierzu wurden 428,565 g des getrockneten Epikote^{®} 828LVEL zugegeben. Anschließend wurden 2,142 g 4-Methylphthalsäureanhydrid (0,5 Gew.-% bezogen auf Epoxidharz) zugesetzt und dann wurde kurz gemischt. Die Mischung wurde mit 0,110 g DBTL versetzt und es wurde 2 Stunden im Vakuum bei 110°C umgesetzt.

### Beispiel 17

Epikote^{®} 828LVEL wurde 2 Stunden bei 90 °C unter Vakuum getrocknet. 120 g des in Herstellungsbeispiel 1 hergestellten NCO-terminierten Präpolymers 1 wurden in einem Gefäß vorgelegt. Hierzu wurden 428,565 g des getrockneten Epikote^{®} 828LVEL zugegeben. Anschließend wurden 3,214 g 4-Methylphthalsäureanhydrid (0,75 Gew.-% bezogen auf Epoxidharz) zugesetzt und dann wurde kurz gemischt. Die Mischung wurde mit 0,110 g DBTL versetzt und es wurde 2 Stunden im Vakuum bei 110°C umgesetzt.

### Beispiel 18

Epikote^{®} 828LVEL wurde 2 Stunden bei 90 °C unter Vakuum getrocknet. 120 g des in Herstellungsbeispiel 1 hergestellten NCO-terminierten Präpolymers 1 wurden in einem Gefäß vorgelegt. Hierzu wurden 428,565 g des getrockneten Epikote^{®} 828LVEL zugegeben. Anschließend wurden 6,428 g 4-Methylphthalsäureanhydrid (1,5 Gew.-% bezogen auf Epoxidharz) zugesetzt und dann wurde kurz gemischt. Die Mischung wurde mit 0,111 g DBTL versetzt und es wurde 2 Stunden im Vakuum bei 110°C umgesetzt.

### Beispiel 19

Epikote^{®} 828LVEL wurde 2 Stunden bei 90 °C unter Vakuum getrocknet. 120 g des in Herstellungsbeispiel 2 hergestellten NCO-terminierten Präpolymers 2 wurden in einem Gefäß vorgelegt. Hierzu wurden 513,565 g des getrockneten Epikote^{®} 828LVEL zugegeben. Anschließend wurden 15,407 g 4-Methylphthalsäureanhydrid

(3,0 Gew.-% bezogen auf Epoxidharz) zugesetzt und dann wurde kurz gemischt. Die Mischung wurde mit 0,130 g DBTL versetzt und es wurde 3 Stunden im Vakuum bei 110°C umgesetzt.

### Beispiel 20

Epikote^{®} 828LVEL wurde 2 Stunden bei 90 °C unter Vakuum getrocknet. 120 g des in Herstellungsbeispiel 2 hergestellten NCO-terminierten Präpolymers 2 wurden in einem Gefäß vorgelegt. Hierzu wurden 513,565 g des getrockneten Epikote^{®} 828LVEL zugegeben. Anschließend wurden 26,678 g 4-Methylphthalsäureanhydrid (5,0 Gew.-% bezogen auf Epoxidharz) zugesetzt und dann wurde kurz gemischt. Die Mischung wurde mit 0,132 g DBTL versetzt und es wurde 3 Stunden im Vakuum bei 110°C umgesetzt.

### Bestimmung des Isocyanatgehaltes:

Der Isocyanatgehalt wurde in Gew. % mittels einer Rücktitration mit im Überschuss eingesetztem Di-n-butylamin und 0,1 M Salzsäure bestimmt. Alle Bestimmungen wurden halbmanuell auf einem Mettler-Toledo Titrator des Typs T70 mit automatischer potentiometrischer Endpunktbestimmung durchgeführt. Dazu wurden jeweils 600-800 mg der zu bestimmenden Probe unter Erwärmen in einer Mischung aus 10 ml Isopropanol und 40 ml Xylol gelöst und anschließend mit einer Lösung von Dibutylamin in Xylol umgesetzt. Überschüssiges Di-n-butylamin wurde mit 0,1M Salzsäure titriert und daraus der Isocyanatgehalt berechnet. Die Bestimmung erfolgte 3 Stunden bzw. 1 Tag nach der Herstellung.

### Bestimmung der Viskosität:

Viskositätsmessungen erfolgten auf einem Rheometer vom Typ MCR 101 des Herstellers Anton Paar rotatorisch unter Verwendung einer Platten-Platten Geometrie mit folgenden Parametern: 50 s⁻¹ Rotation, 0,2 mm Spalt, Platte-Platte-Abstand 25 mm.

In Tabelle 7 sind Ergebnisse für die Beispiele 15 bis 20 zusammengestellt.

**Tabelle 7**

| | Zugabe MPA (Gew.-%) | NCO (3h) | NCO (1d) | Viskosität (1d), 25/50°C, [Pa*s] |
|---|---|---|---|---|
| Bsp. 15 | 0,25 | 0,17 | 0,15 | 139/25 |
| Bsp. 16 | 0,50 | 0,31 | 0,27 | 54/6 |
| Bsp. 17 | 0,75 | 0,35 | 0,29 | 51/5 |
| Bsp. 18 | 1,50 | 0,42 | 0,31 | 51/5 |
| Bsp. 19 | 3,00 | 1,02 | 0,48 | 71/13 |
| Bsp. 20 | 5,00 | 0,78 | 0,25 | 287/50 |

### Beispiele 21 bis 24

In den Beispielen 21 bis 24 wurden ähnlich wie in den Beispielen 15 bis 20 ein Isocyanat-terminiertes Präpolymer mit einer Epoxidverbindung blockiert, wobei D.E.R.^{®} 331 anstelle von Epikote^{®} 828LVEL als Epoxidverbindung eingesetzt wurde. In Tabelle 8 sind die Ergebnisse für die Beispiele 21 bis 24 zusammengestellt.

**Tabelle 8**

| | Zugabe MPA (Gew.-%) | NCO (3h) | NCO (1d) | Viskosität (1d) 25/50°C [Pa*s] |
|---|---|---|---|---|
| Bsp. 21 | 0,25% | 0,12% | 0,08% | 151/27 |
| Bsp. 22 | 0,50% | 0,29% | 0,23% | 137/16 |
| Bsp. 23 | 0,75% | 0,26% | 0,21% | 137/16 |
| Bsp. 24 | 1,50% | 0,31% | 0,30% | 99/12 |

### Beispiel 25

### Herstellung eines 2K-Klebstoffs

Folgendes Beispiel soll die Verwendung eines erfindungsgemäßen Schlagzähmodifikators weiter veranschaulichen, den Umfang der Erfindung aber in keiner Weise beschränken. Die dazu verwendeten Rohstoffe sind in Tabelle 9 angegeben.

**Tabelle 9**

| Verwendete Rohstoffe | Lieferant |
|---|---|
| D.E.R.^{®} 331 | Dow |
| Araldite^{®} DY 91158 | Huntsman |
| Omyacarb^{®} 5GU | Omya |
| Aerosil^{®} R202 | Evonik |
| Epoxidharz Farbpaste blau | Lehmann |
| Ancamine^{®} 1922A | Air Products |
| Ancamine^{®} K54 | Air Products |

Zur Herstellung der A-Komponente wurden 163,2 g des Schlagzähigkeitsmodifikators aus Beispiel 23 mit 109,8 g des Epoxidharzes D.E.R.^{®} 331, 6,0 g des Haftvermittlers Araldite^{®} DY91158, 0,6 g Epoxidharz Farbpaste Blau, 9,0 g Omyacarb^{®} 5GU und 12 g Aerosil^{®} R202 in einem Planetarmischer bei 60 °C unter Vakuum zu einer homogen Paste gerührt. Die flüssige B-Komponente wurde bei Raumtemperatur durch Mischen von 285 g Ancamine^{®} 1922A und 15 g Ancamine^{®} K 54 in einem Planetarmischer hergestellt.

Aus beiden Komponenten wurden 40,0 g des fertigen Klebstoffes durch zweiminütiges Mischen von 32,37 g der A-Komponente und 7,67 g der B-Komponente in einem Speedmixer^{®} der Firma Hauschild des Typs 600DAV FVZ bei 2350 U/min erhalten. Das Mischungsverhältnis von 4,22 (A-Komponente) zu 1 (B-Komponente) ergab sich hierbei wie in Tabelle 10 durch das gewählte 1:1 Äquivalent von NH-Äquivalentmasse zur Epoxidäquivalentmasse.

**Tabelle 10**

| A-Komponente | Anteil [%] |
|---|---|
| D.E.R.^{®} 331 | 36,59 |
| Schlagzähmodifikator Beispiel 15 | 54,41 |
| Araldite^{®} DY 91158 | 2,00 |
| Omyacarb^{®} 5GU | 3,00 |
| Aerosil^{®} R202 | 4,00 |
| Farbpaste Blau | 0,20 |
| Epoxidäquivalentmasse | 245,30 |

| B-Komponente | Anteil [%] |
|---|---|
| Ancamine^{®} 1922A | 95,00 |
| Ancamine^{®} K54 | 5,00 |
| NH-Äquivalentmasse | 58,20 |

Unmittelbar nach Mischen der Klebstoffformulierung wurde wie vorstehend beschrieben der Prüfkörper zur Ermittlung der Zugfestigkeit, der Zugscherfestigkeit sowie des Schlagschälwiderstands hergestellt. Nach Aushärten der Probekörper nach den drei Härtungsregimen 4h Raumtemperatur+ 30 min 60°C, 1d Raumtemperatur, 7d Raumtemperatur wurden dabei die in Tabelle 11 angegebenen Werte ermittelt.

**Tabelle 11**

| Aushärtung | | |
|---|---|---|
| 4h RT+ 30 min 60°C | ZF [MPa] | 26,34 |
| | BE¹ RT [MPa] | 14,63 |
| 1d RT | ZSF [MPa] | 25,41 |
| | BE¹ RT [J] | 14,46 |
| 7d RT | ZF [MPa] | 22,1 |
| | ZSF [MPa] | 27,88 |
| | BE¹ RT [J] | 14,15 |
| | BE¹ 0°C [J] | 14,51 |
| | BE¹ -30°C [J] | 4,14 |

## Patentansprüche

1. Verfahren zur Herstellung eines Epoxidgruppen-terminierten Schlagzähigkeitsmodifikators, umfassend die Umsetzung von
a) zwei oder mehr Polyolen der Formel (I) 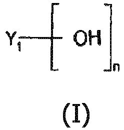 worin Y₁ für einen n-wertigen Rest eines reaktiven Polymers nach dem Entfernen endständiger Hydroxylgruppen steht; und n = 2, 3 oder 4; bevorzugt 2 oder 3, ist,
b) einem oder mehreren Polyisocyanaten der Formel (II) 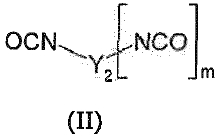 worin Y₂ für einen divalenten Rest von aliphatischen, cycloaliphatischen, aromatischen oder araliphatischen Diisocyanaten nach Entfernen der Isocyanatgruppen steht, oder für einen trivalenten Rest von Trimeren oder Biureten von aliphatischen, cycloaliphatischen, aromatischen oder araliphatischen Diisocyanaten nach Entfernen der Isocyanatgruppen steht; und m = 1 oder 2 ist; und
c) mindestens einem Epoxidharz, umfassend eine eine primäre oder sekundäre Hydroxygruppe enthaltende Epoxidverbindung der Formel (III) 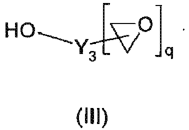 worin Y₃ für einen Rest eines eine primäre oder sekundäre Hydroxylgruppe enthaltenden aliphatischen, cycloaliphatischen, aromatischen oder araliphatischen Epoxids nach dem Entfernen der Epoxidgruppen und der primären oder sekundären Hydroxylgruppe steht; und q = 1, 2 oder 3 ist,
wobei die Polyole der Formel (I) a1) mindestens ein Polyetherpolyol und a2) mindestens einen OH-terminierten Kautschuk umfassen, wobei das Gewichtsverhältnis von Polyetherpolyol zu OH-terminiertem Kautschuk im Bereich von 7:3 bis 2:8 liegt.

2. Verfahren nach Anspruch 1, **dadurch gekennzeichnet, dass** der OH-terminierte Kautschuk a2) ausgewählt ist aus mindestens einem aus der Gruppe bestehend aus Hydroxyl-terminierten Polybutadienen und auf Rizinusöl basierten Polyolen, wobei bevorzugt zwei OH-terminierte Kautschuke eingesetzt werden.

3. Verfahren nach Anspruch 1 oder Anspruch 2, **dadurch gekennzeichnet, dass** der OH-terminierte Kautschuk a2) eine OH-Funktionalität im Bereich von 1,7 bis 2,8 aufweist, wobei eine OH-Funktionalität von kleiner gleich 2 für einen 2K-Epoxidharzklebstoff und von 2,4 bis 2,8 für einen 1K-Epoxidharzklebstoff bevorzugt ist.

4. Verfahren nach irgendeinem der Ansprüche 1 bis 3, **dadurch gekennzeichnet, dass** das Polyetherpolyol a1) ein Polymerisationsprodukt von Ethylenoxid, Propylenoxid, Butylenoxid oder Tetrahydrofuran oder Mischungen davon ist, wobei ein Polytetrahydrofuran oder ein Polypropylenoxid bevorzugt ist.

5. Verfahren nach irgendeinem der Ansprüche 1 bis 4, **dadurch gekennzeichnet, dass** das Polyetherpolyol a1) ein Gewichtsmittel des Molekulargewichts im Bereich von 1.000 bis 3.000 g/mol aufweist.

6. Verfahren nach irgendeinem der Ansprüche 1 bis 5, **dadurch gekennzeichnet, dass** die Umsetzung in einer Eintopfreaktion oder in einer zweistufigen Umsetzung durchgeführt wird, wobei bei der zweistufigen Umsetzung im ersten Schritt die zwei oder mehr Polyole der Formel (I) mit dem mindestens einen Polyisocyanat der Formel (II) umgesetzt werden, um ein Isocyanat-terminiertes Präpolymer zu erhalten, und im zweiten Schritt das Isocyanat-terminierte Präpolymer mit dem Epoxidharz, umfassend eine eine primäre oder sekundäre Hydroxygruppe enthaltende Epoxidverbindung der Formel (III) umgesetzt wird, um den Epoxidgruppen-terminierten Schlagzähigkeitsmodifikator zu erhalten.

7. Verfahren nach irgendeinem der Ansprüche 1 bis 6, **dadurch gekennzeichnet, dass** das Epoxidharz c) ein Umsetzungsprodukt aus mindestens einem Epoxid und mindestens einem Diol, Triol oder höherwertigen Polyol oder ein Umsetzungsprodukt aus einem Epoxidharz und mindestens einem Monophenol ist oder umfasst.

8. Verfahren nach irgendeinem der Ansprüche 1 bis 7, **dadurch gekennzeichnet, dass** das c) Epoxidharz ausgewählt ist aus einem Bisphenol A-diglycidylether-Produkt, einem Bisphenol F-diglycidylether-Produkt oder einem Bisphenol A/Fdigylcidylether-Produkt.

9. Verfahren nach irgendeinem der Ansprüche 1 bis 8, **dadurch gekennzeichnet, dass** die Isocyanatgruppen eines gebildeten Isocyanat-terminierten Präpolymers durch die Umsetzung mit der Epoxidverbindung (III) teilweise oder vollständig blockiert werden.

10. Verfahren nach irgendeinem der Ansprüche 1 bis 9, **dadurch gekennzeichnet, dass** eine Mischung von dem Hydroxy-terminierten Kautschuk und einem Epoxid-Flüssigharz hergestellt aus Bisphenol-A und Epichlorhydrin in einem Gewichtsverhältnis von 40 zu 60 einen Haze-Wert gemessen nach ASTM D1003-11^{ε1} im Bereich von 50 bis 100 aufweist und/oder eine Mischung von Polyetherpolyol und einem Epoxid-Flüssigharz hergestellt aus Bisphenol-A und Epichlorhydrin in einem Gewichtsverhältnis von 40 zu 60 einen Haze-Wert gemessen nach ASTM D1003-11^{ε1} im Bereich von 0 bis 5 aufweist.

11. Verfahren nach irgendeinem der Ansprüche 1 bis 10, **dadurch gekennzeichnet**, eine Mischung von dem hergestellten Epoxidgruppen-terminierten Schlagzähigkeitsmodifikator und einem Epoxid-Flüssigharz hergestellt aus Bisphenol-A und Epichlorhydrin in einem Gewichtsverhältnis von 20 zu 80 einen Haze-Wert gemessen nach ASTM D1003-11^{ε1} im Bereich von 20 bis 100 aufweist.

12. Epoxidgruppen-terminierter Schlagzähigkeitsmodifikator, umfassend das Umsetzungsprodukt von
a) zwei oder mehr Polyolen der Formel (I) 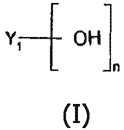 worin Y₁ für einen n-wertigen Rest eines reaktiven Polymers nach dem Entfernen endständiger Hydroxylgruppen steht; und n = 2, 3 oder 4; bevorzugt 2 oder 3, ist,
b) einem oder mehreren Polyisocyanaten der Formel (II) 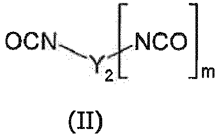 worin Y₂ für einen divalenten Rest von aliphatischen, cycloaliphatischen, aromatischen oder araliphatischen Diisocyanaten nach Entfernen der Isocyanatgruppen steht, oder für einen trivalenten Rest von Trimeren oder Biureten von aliphatischen, cycloaliphatischen, aromatischen oder araliphatischen Diisocyanaten nach Entfernen der Isocyanatgruppen steht; und m = 1 oder 2 ist; und
c) mindestens einem Epoxidharz, umfassend eine eine primäre oder sekundäre Hydroxygruppe enthaltende Epoxidverbindung der Formel (III) 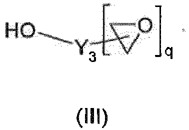 worin Y₃ für einen Rest eines eine primäre oder sekundäre Hydroxylgruppe enthaltenden aliphatischen, cycloaliphatischen, aromatischen oder araliphatischen Epoxids nach dem Entfernen der Epoxidgruppen und der primären oder sekundären Hydroxylgruppe steht; und q = 1, 2 oder 3 ist,
wobei die Polyole der Formel (I) a1) mindestens ein Polyetherpolyol und a2) mindestens einen OH-terminierten Kautschuk umfassen, wobei das Gewichtsverhältnis von Polyetherpolyol zu OH-terminiertem Kautschuk im Bereich von 7:3 bis 2:8 liegt.

13. Epoxidgruppen-terminierter Schlagzähigkeitsmodifikator nach Anspruch 12, erhältlich nach einem Verfahren gemäß irgendeinem der Ansprüche 1 bis 11.

14. Verwendung eines Epoxidgruppen-terminierten Schlagzähigkeitsmodifikators nach Anspruch 12 oder Anspruch 13 in einer einkomponentigen oder zweikomponentigen Epoxidharzzusammensetzung, bevorzugt in einem einkomponentigen oder zweikomponentigen Epoxidharzklebstoff, zur Erhöhung der Schlagzähigkeit der gehärteten Epoxidharzmatrix.

15. 1K- oder 2K-Epoxidharzzusammensetzung, umfassend mindestens einen Epoxidgruppen-terminierten Schlagzähigkeitsmodifikator nach Anspruch 12 oder Anspruch 13.

## Claims

1. Method for producing an epoxy group-terminated impact modifier, comprising the reaction of
a) two or more polyols of formula (I) 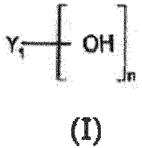 where Y₁ stands for an n-valent residue of a reactive polymer after the removal of terminal hydroxyl groups; and n = 2, 3 or 4; preferably 2 or 3,
b) one or more polyisocyanates of formula (II) 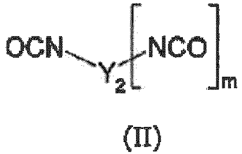 where Y₂ stands for a divalent residue of aliphatic, cycloaliphatic, aromatic or araliphatic diisocyanates after the removal of the isocyanate groups, or for a trivalent residue of trimers or biurets of aliphatic, cycloaliphatic, aromatic or araliphatic diisocyanates after the removal of the isocyanate groups; and m = 1 or 2; and
c) at least one epoxy resin comprising an epoxy compound of formula (III) 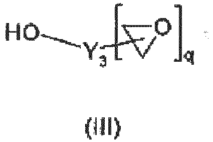
containing a primary or secondary hydroxy group,
where Y₃ stands for a residue of a primary or secondary hydroxyl group-containing aliphatic, cycloaliphatic, aromatic or araliphatic epoxide after the removal of the epoxy groups and of the primary or secondary hydroxyl group; and q = 1, 2 or 3,
wherein the polyols of formula (I) comprise a1) at least one polyether polyol and a2) at least one OH-terminated rubber, wherein the weight ratio of polyether polyol to OH-terminated rubber is in the range from 7:3 to 2:8.

2. Method according to Claim 1, **characterized in that** the OH-terminated rubber a2) is selected from at least one from the group consisting of hydroxyl-terminated polybutadienes and castor oil-based polyols, wherein preferably two OH-terminated rubbers are used.

3. Method according to Claim 1 or Claim 2, **characterized in that** the OH-terminated rubber a2) has an OH functionality in the range from 1.7 to 2.8, wherein for a 2K epoxy resin adhesive an OH functionality of less than or equal to 2 and for a 1K epoxy resin adhesive one of 2.4 to 2.8 is preferable.

4. Method according to any one of Claims 1 to 3, **characterized in that** the polyether polyol a1) is a polymerization product of ethylene oxide, propylene oxide, butylene oxide or tetrahydrofuran or mixtures thereof, wherein a polytetrahydrofuran or a polypropylene oxide is preferable.

5. Method according to any one of Claims 1 to 4, **characterized in that** the polyether polyol a1) has a weight average molecular weight in the range from 1000 to 3000 g/mol.

6. Method according to any one of Claims 1 to 5, **characterized in that** the reaction is carried out in a one-pot reaction or in a two-step reaction, wherein, in the two-step reaction, in the first step, the two or more polyols of formula (I) are reacted with the at least one polyisocyanate of formula (II) in order to obtain an isocyanate-terminated prepolymer, and, in the second step, the isocyanate-terminated prepolymer is reacted with the epoxy resin comprising a primary or secondary hydroxy group-containing epoxy compound of formula (III) in order to obtain the epoxy group-terminated impact modifier.

7. Method according to any one of Claims 1 to 6, **characterized in that** the epoxy resin c) is or comprises a reaction product of at least one epoxide and at least one diol, triol or higher-valence polyol or a reaction product of an epoxy resin and at least one monophenol.

8. Method according to any one of Claims 1 to 7, **characterized in that** the epoxy resin c) is selected from a bisphenol A-diglycidyl ether product, a bisphenol F-diglycidyl ether product or a bisphenol A/F-diglycidyl ether product.

9. Method according to any one of Claims 1 to 8, **characterized in that** the isocyanate groups of an isocyanate-terminated prepolymer formed are partially or completely blocked by the reaction with the epoxy compound (III).

10. Method according to any one of Claims 1 to 9, **characterized in that** a mixture of the hydroxy-terminated rubber and an epoxy liquid resin produced from bisphenol-A and epichlorohydrin in a weight ratio of 40 to 60 has a haze value measured according to ASTM D1003-11^{ε1} in the range from 50 to 100 and/or a mixture of polyether polyol and an epoxy liquid resin produced from bisphenol-A and epichlorohydrin in a weight ratio from 40 to 60 has a haze value measured according to ASTM D1003-11^{ε1} in the range from 0 to 5.

11. Method according to any one of Claims 1 to 10, **characterized in that** a mixture of the epoxy group-terminated impact modifier produced and an epoxy liquid resin produced from bisphenol-A and epichlorohydrin in a weight ratio from 20 to 80 has a haze value measured according to ASTM D1003-11^{ε1} in the range from 20 to 100.

12. Epoxy group-terminated impact modifier, comprising the reaction product of
a) two or more polyols of formula (I) 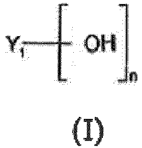 where Y₁ stands for an n-valent residue of a reactive polymer after the removal of terminal hydroxyl groups; and n = 2, 3 or 4; preferably 2 or 3,
b) one or more polyisocyanates of formula (II) 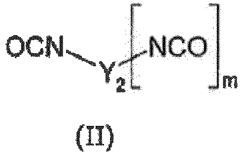 where Y₂ stands for a divalent residue of aliphatic, cycloaliphatic, aromatic or araliphatic diisocyanates after the removal of the isocyanate groups, or for a trivalent residue of trimers or biurets of aliphatic, cycloaliphatic, aromatic or araliphatic diisocyanates after the removal of the isocyanate groups; and m = 1 or 2; and
c) at least one epoxy resin comprising an epoxy compound of formula (III) 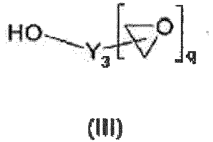
containing a primary or secondary hydroxy group,
where Y₃ stands for a residue of a primary or secondary hydroxyl group-containing aliphatic, cycloaliphatic, aromatic or araliphatic epoxide after the removal of the epoxy groups and of the primary or secondary hydroxyl group; and q = 1, 2 or 3,
wherein the polyols of formula (I) comprise a1) at least one polyether polyol and a2) at least one OH-terminated rubber, wherein the weight ratio of polyether polyol to OH-terminated rubber is in the range from 7:3 to 2:8.

13. Epoxy group-terminated impact modifier according to Claim 12, which can be obtained by a method according to any one of Claims 1 to 11.

14. Use of an epoxy group-terminated impact modifier according to Claim 12 or Claim 13 in a one-component or two-component epoxy resin composition, preferably in a one-component or two-component epoxy resin adhesive, for increasing the impact resistance of the cured epoxy resin matrix.

15. 1K or 2K epoxy resin composition, comprising at least one epoxy group-terminated impact modifier according to Claim 12 or Claim 13.

## Revendications

1. Procédé de fabrication d'un modificateur de la résistance aux impacts terminé par des groupes époxyde, comprenant la mise en réaction de
a) deux polyols ou plus de formule (I) 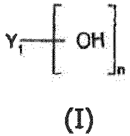 dans laquelle Y₁ représente un radical n-valent d'un polymère réactif après l'élimination de groupes hydroxyle terminaux ; et n = 2, 3 ou 4 ; de préférence 2 ou 3,
b) un ou plusieurs polyisocyanates de formule (II) 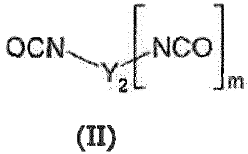 dans laquelle Y₂ représente un radical bivalent de diisocyanates aliphatiques, cycloaliphatiques, aromatiques ou araliphatiques après l'élimination des groupes isocyanate, ou un radical trivalent de trimères ou de biurets de diisocyanates aliphatiques, cycloaliphatiques, aromatiques ou araliphatiques après l'élimination des groupes isocyanate ; et m = 1 ou 2 ; et
c) au moins une résine époxyde, comprenant un composé d'époxyde contenant un groupe hydroxy primaire ou secondaire de formule (III) 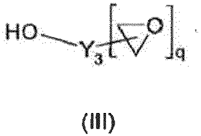 dans laquelle Y₃ représente un radical d'un époxyde aliphatique, cycloaliphatique, aromatique ou araliphatique contenant un groupe hydroxyle primaire ou secondaire après l'élimination des groupes époxyde et du groupe hydroxyle primaire ou secondaire ; et q = 1, 2 ou 3,
les polyols de formule (I) comprenant a1) au moins un polyéther polyol et a2) au moins un caoutchouc à terminaison OH, le rapport en poids entre le polyéther polyol et le caoutchouc à terminaison OH se situant dans la plage allant de 7:3 à 2:8.

2. Procédé selon la revendication 1, **caractérisé en ce que** le caoutchouc à terminaison OH a2) est au moins un caoutchouc choisi dans le groupe constitué par les polybutadiènes à terminaison hydroxyle et les polyols à base d'huile de ricin, deux caoutchoucs à terminaison OH étant utilisés de préférence.

3. Procédé selon la revendication 1 ou la revendication 2, **caractérisé en ce que** le caoutchouc à terminaison OH a2) présente une fonctionnalité OH dans la plage allant de 1,7 à 2,8, une fonctionnalité OH inférieure ou égale à 2 étant préférée pour un adhésif à base de résine époxyde 2K et de 2,4 à 2,8 pour un adhésif à base de résine époxyde 1K.

4. Procédé selon l'une quelconque des revendications 1 à 3, **caractérisé en ce que** le polyéther polyol a1) est un produit de polymérisation d'oxyde d'éthylène, d'oxyde de propylène, d'oxyde de butylène ou de tétrahydrofurane ou leurs mélanges, un polytétrahydrofurane ou un polyoxyde de propylène étant préféré.

5. Procédé selon l'une quelconque des revendications 1 à 4, **caractérisé en ce que** le polyéther polyol a1) présente une moyenne en poids du poids moléculaire dans la plage allant de 1 000 à 3 000 g/mol.

6. Procédé selon l'une quelconque des revendications 1 à 5, **caractérisé en ce que** la réaction est réalisée par une réaction monotope ou une réaction à deux étapes ; dans le cas de la réaction à deux étapes, les deux polyols ou plus de formule (I) étant mis en réaction lors de la première étape avec ledit au moins un polyisocyanate de formule (II) pour obtenir un prépolymère à terminaison isocyanate, et le prépolymère à terminaison isocyanate étant mis en réaction lors de la seconde étape avec la résine époxyde, comprenant un composé d'époxyde de formule (III) contenant un groupe hydroxy primaire ou secondaire, pour obtenir le modificateur de la résistance aux impacts terminé par des groupes époxyde.

7. Procédé selon l'une quelconque des revendications 1 à 6, **caractérisé en ce que** la résine époxyde c) est ou comprend un produit de réaction d'au moins un époxyde et d'au moins un diol, un triol ou un polyol d'une valence supérieure, ou un produit de réaction d'une résine époxyde et d'au moins un monophénol.

8. Procédé selon l'une quelconque des revendications 1 à 7, **caractérisé en ce que** la résine époxyde c) est choisie parmi un produit éther diglycidylique de bisphénol A, un produit éther diglycidylique de bisphénol F ou un produit éther diglycidylique de bisphénol A/F.

9. Procédé selon l'une quelconque des revendications 1 à 8, **caractérisé en ce que** les groupes isocyanate d'un prépolymère à terminaison isocyanate formé sont bloqués en partie ou en totalité par la réaction avec le composé d'époxyde (III).

10. Procédé selon l'une quelconque des revendications 1 à 9, **caractérisé en ce qu'**un mélange du caoutchouc à terminaison hydroxy et d'une résine époxyde liquide fabriquée à partir de bisphénol A et d'épichlorhydrine en un rapport en poids de 40 sur 60 présente une valeur de trouble mesurée selon ASTM D1003-11^{ε1} dans la plage allant de 50 à 100, et/ou un mélange de polyéther polyol et d'une résine époxyde liquide fabriquée à partir de bisphénol A et d'épichlorhydrine en un rapport en poids de 40 sur 60 présente une valeur de trouble mesurée selon ASTM D1003-11^{ε1} dans la plage allant de 0 à 5.

11. Procédé selon l'une quelconque des revendications 1 à 10, **caractérisé en ce qu'**un mélange du modificateur de la résistance aux impacts terminé par des groupes époxyde fabriqué et d'une résine époxyde liquide fabriquée à partir de bisphénol A et d'épichlorhydrine en un rapport en poids de 20 sur 80 présente une valeur de trouble mesurée selon ASTM D1003-11^{ε1} dans la plage allant de 20 à 100.

12. Modificateur de la résistance aux impacts terminé par des groupes époxyde, comprenant le produit de réaction de
a) deux polyols ou plus de formule (I) 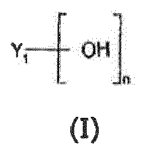 dans laquelle Y₁ représente un radical n-valent d'un polymère réactif après l'élimination de groupes hydroxyle terminaux ; et n = 2, 3 ou 4 ; de préférence 2 ou 3,
b) un ou plusieurs polyisocyanates de formule (II) 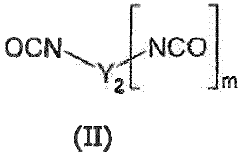 dans laquelle Y₂ représente un radical bivalent de diisocyanates aliphatiques, cycloaliphatiques, aromatiques ou araliphatiques après l'élimination des groupes isocyanate, ou un radical trivalent de trimères ou de biurets de diisocyanates aliphatiques, cycloaliphatiques, aromatiques ou araliphatiques après l'élimination des groupes isocyanate ; et m = 1 ou 2 ; et
c) au moins une résine époxyde, comprenant un composé d'époxyde contenant un groupe hydroxy primaire ou secondaire de formule (III) 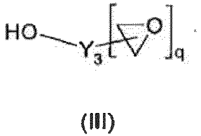 dans laquelle Y₃ représente un radical d'un époxyde aliphatique, cycloaliphatique, aromatique ou araliphatique contenant un groupe hydroxyle primaire ou secondaire après l'élimination des groupes époxyde et du groupe hydroxyle primaire ou secondaire ; et q = 1, 2 ou 3, les polyols de formule (I) comprenant a1) au moins un polyéther polyol et a2) au moins un caoutchouc à terminaison OH, le rapport en poids entre le polyéther polyol et le caoutchouc à terminaison OH se situant dans la plage allant de 7:3 à 2:8.

13. Modificateur de la résistance aux impacts terminé par des groupes époxyde selon la revendication 12, pouvant être obtenu par un procédé selon l'une quelconque des revendications 1 à 11.

14. Utilisation d'un modificateur de la résistance aux impacts terminé par des groupes époxyde selon la revendication 12 ou la revendication 13 dans une composition de résine époxyde monocomposante ou bicomposante, de préférence dans un adhésif à base de résine époxyde monocomposant ou bicomposant, pour augmenter la résistance aux impacts de la matrice de résine époxyde durcie.

15. Composition de résine époxyde 1K ou 2K, comprenant au moins un modificateur de la résistance aux impacts terminé par des groupes époxyde selon la revendication 12 ou la revendication 13.
